# EUROPEAN PATENT APPLICATION

(11) **EP 2 645 316 A1**
(43) Date of publication of application: **02.10.2013**
(21) Application number: 13161295.4
(22) Date of filing: 27.03.2013
(51) Int. Cl.: G06Q 10/06

(54) **Information processing method, program, medium, and system**

(30) Priority: 30.03.2012 JP 2012079604
(71) Applicant: FUJITSU LIMITED, Kawasaki-shi, Kanagawa 211-8588 (JP)
(72) Inventor: Kiyoumi, Yuta, Kawasaki-shi Kanagawa 211-8588 (JP)
(74) Representative: HOFFMANN EITLE

(57) **Abstract**

An information processing method, which automates operation tasks in an information processing system using a workflow which represents an operation procedure of the information processing system by connection of a plurality of nodes, the method includes: creating a new workflow including at least a first node which executes control processing of the information processing system and a second node to which is added a form including a screen component which performs at least of input and output to information relating to the control processing; detecting a pattern of the new workflow to be created; deciding a screen component to be arranged on a form screen of the new workflow, based on the pattern of the new workflow and the content of control processing of the first node in the new workflow; and arranging the screen component of the new workflow on the form screen.

## Description

### FIELD

The embodiments disclosed herein are related to an information processing method, a program, a medium, and a system.

### BACKGROUND

Information and Communication Technology (ICT) systems, such as the data centers provided in enterprises and similar, have numerous information processing devices, such as server devices, storage devices, and network devices. A data center uses these information processing devices to execute various information processing related to the business of the enterprise. Further, when the enterprise is a service enterprise which provides computer services, so-called cloud services (IaaS: Infrastructure as a Service) are provided, in which virtual machines constructed in server devices of the data center are provided to users.

A data center manager manually performs operation management tasks for the data center while referencing an operation procedure manual. This operation procedure manual describes, by processes (steps), manipulation procedures for information processing devices in the data center during normal operation and in emergencies.

With the advancing concentration of data centers in business systems, the quantity of tasks in data centers is increasing, and there have been increases in the content and burden of operation management tasks for data centers. As a result, operation procedure automation technology has been proposed as technology in which manual data center operation management tasks are automated in workflows, and the burden of operation management tasks is alleviated while improving the quality of operation management tasks. For example, Run Book Automation (RBA) is representative of operation procedure automation technology. Hereafter, operation procedure automation technology will be denoted by "RBA" as appropriate.

A data center manager, upon creating in advance a workflow which automatically executes operation management tasks, thereafter execute this workflow, and the workflow automatically executes operation management tasks.

Various types of workflows are described, for example, Japanese Laid-open Patent Publication No. 11-85880, Japanese Laid-open Patent Publication No. 2000-148879, and ITO Hiroaki, " Operation Efficiency Improvements for IT Infrastructure through Automation Technology",FUJITSU, 42-46, 01-2011.

Because the operation management tasks of a data center (ICT system) are many and varied, the creator creating a workflow must create numerous different workflows. As a result, the burden of tasks to be performed by the workflow creator is increased.

### SUMMARY

In one aspect, an object of this invention is to provide an information processing method, a program, a medium, and a system which alleviates the task burden of a workflow creator.

According to an aspect of the embodiments, An information processing method, which automates operation tasks in an information processing system using a workflow which represents an operation procedure of the information processing system by connection of a plurality of nodes, the information processing method includes: creating a new workflow including at least a first node which executes control processing of the information processing system and a second node to which is added a form including a screen component which performs at least of input and output to information relating to the control processing, by a processor; detecting a pattern of the new workflow to be created, based on first information which stores a workflow pattern by the processor; deciding a screen component to be arranged on a form screen of the new workflow, based on the pattern of the new workflow and the content of control processing of the first node in the new workflow, by the processor; and arranging the screen component of the new workflow on the form screen by the processor.

By means of an embodiment, the task burden on the workflow creator can be alleviated.

### BRIEF DESCRIPTION OF DRAWINGS

Fig. 1 is a block diagram illustrating one example of the hardware configuration of the information processing system of an embodiment;
Fig. 2 is a block diagram illustrating one example of the hardware configuration of the workflow creation device of Fig. 1;
Fig. 3 is a block diagram illustrating one example of the hardware configuration of the workflow execution device of Fig. 1;
Fig. 4 illustrates one example of a workflow creation screen displayed on the display device of Fig. 2;
Fig. 5 illustrates one example of a form creation screen displayed on the display device of Fig. 2, in a case where there is a previously created workflow;
Fig. 6 illustrates an example of a form screen automatically created by the workflow creation device of Fig. 2;
Fig. 7 illustrates an example of a workflow creation screen displayed on the display device of Fig. 2, in a case where there is no previously created workflow;
Fig. 8 is a block diagram illustrating software modules of the workflow creation device of Fig. 2;
Fig. 9 illustrates an example of a workflow management table Tw1 which manages a workflow;
Fig. 10 illustrates an example of an activity management table Ta1 which manages activities of a workflow;
Fig. 11 illustrates an example of a data range management table Tdm1 which manages data ranges;
Fig. 12 illustrates an example of a form management table Tfm1 which manages forms;
Fig. 13 illustrates an example of a pattern management table Tp to detect the pattern of the workflows in Fig. 2 and Fig. 8;
Fig. 14 illustrates an example of an operation manipulation component management table To which manages the operation manipulation components in Fig. 2 and Fig. 8;
Fig. 15 illustrates an example of a screen component definition table Tdp which defines screen components arranged on the form screen in Fig. 2 and Fig. 8;
Fig. 16 illustrates an example of a form template Tft which is referenced when arranging screen components on the form screen in Fig. 2 and Fig. 8;
Fig. 17 illustrates an example of a data range template Tdt which is referenced when first creating a workflow, and when the same workflow or a similar workflow is not stored, in Fig. 2 and Fig. 8;
Fig. 18 illustrates an example of an execution history management table Tg which manages the execution history of operation manipulation components in Fig. 3;
Fig. 19 is a flowchart explaining in summary workflow creation processing to be executed by the workflow creation device 5 of Fig. 8;
Fig. 20 is a flowchart explaining in summary form automated creation processing in a case where a previously created workflow exists in Fig. 8;
Fig. 21 is a flowchart explaining in detail the processing of step S11 in Fig. 20;
Fig. 22 is a flowchart explaining in detail the processing of step S13 in Fig. 20;
Fig. 23 is a flowchart explaining in detail the processing of step S14 in Fig. 20;
Fig. 24 illustrates an example of a workflow management table Tw2 explained in Fig. 30;
Fig. 25 illustrates an example of an activity management table Ta2 explained in Fig. 30;
Fig. 26 illustrates an example of a data range management table Tdm2 explained in Fig. 30;
Fig. 27 illustrates an example of a form management table Tfm2 explained in Fig. 30;
Fig. 28 illustrates a state in which the data range management table Tdm2 of Fig. 26 is updated by customizing a form;
Fig. 29 illustrates a state in which the form management table Tfm2 of Fig. 27 is updated by customizing a form; and
Fig. 30 is a flowchart explaining form automated creation processing when a workflow is first created in Fig. 8.

### DESCRIPTION OF EMBODIMENTS

### Information Processing System

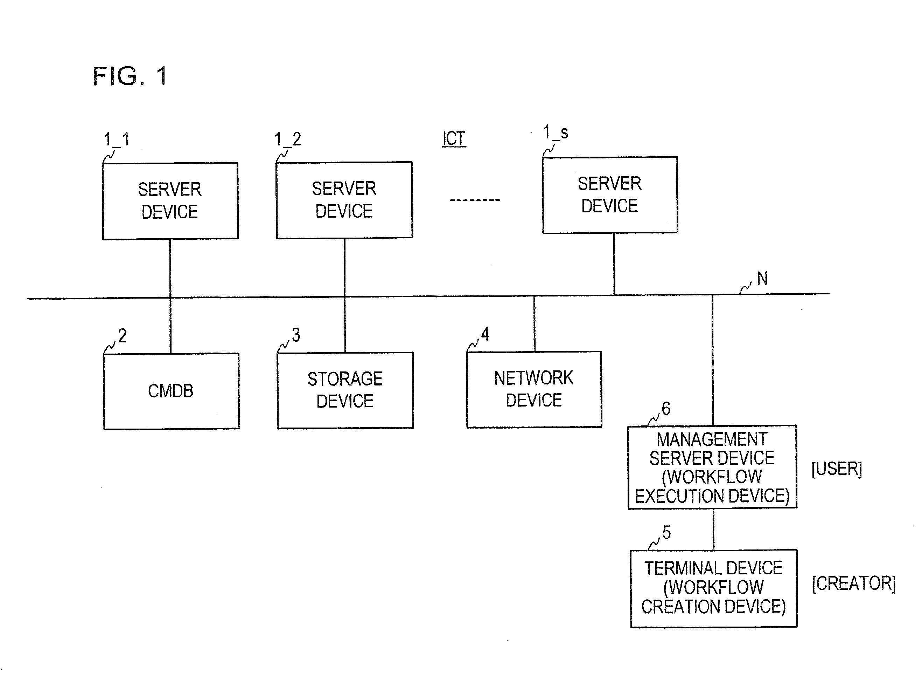

Fig. 1 is a block diagram illustrating an example of the hardware configuration of the information processing system ICT of an embodiment. In the following explanation, blocks with the same functions are denoted by the same symbols. The information processing system ICT is for example an enterprise data center, and executes various information processing related to the business for this enterprise. Further, when the information processing system ICT is a service enterprise data center, the information processing system ICT is provides so-called cloud services.

The information processing system ICT has information processing devices, explained below, which are interconnected via a network N. The information processing system ICT has a plurality of server devices (a first server device 1_1 to an sth server device 1_s (where s is an integer equal to or greater than 3)), a configuration management database device (hereafter called a CMDB (Configuration Management Database)) 2, and a storage device 3. Further, the information processing system ICT has a network device 4, a terminal device (hereafter called a workflow creation device) 5, and a management server device (hereafter called a workflow execution device) 6.

The first server 1_1 to the sth server 1_s are server devices which execute various information processing. For example, the first server 1_1 constructs a virtual machine and causes the virtual machine to execute various processing.

The CMDB 2 is a database server which collects configuration information in the information processing system ICT from the server devices 1_1 to 1_s, the storage device 3, and the network device 4, which are targets for operation management. That is, the CMDB 2 performs unified management of configuration information for each of the devices for operation management. Configuration information includes the names, Internet Protocol (IP) addresses, Uniform Resource Locators (URLs), and other identification information for each of the above-described devices. In addition, configuration information includes information indicating the names of the hardware and identification symbols of each of the above-described devices, the names and identification symbols of each of the software executed by each of the devices respectably, the states of the hardware and software, and similar. Further, in addition to configuration information for the devices which are targets for operation management, the CMDB 2 manages relation information (Relationships) indicating the relations between the various configuration information.

The CMDB 2 collects configuration information by periodically accessing each of the above-described devices. In addition, the CMDB 2 collects configuration information through transmission to the CMDB 2 of configuration information by each of the devices, either periodically or when configuration information has changed. The CMDB 2 stores the collected configuration information as configuration items (CIs).

The storage device 3 stores, for example, the results of information processing executed by the server devices 1_1 to 1_s. The network device 4 is for example a switch device or a router device, and executes data communication processing on the network N and data communication processing with external networks.

The workflow creation device 5 is for example configured using personal computer, and through manipulation by a workflow creator, creates a workflow indicating the flow of operation management, and transmits the created workflow to the workflow execution device 6.

The workflow execution device 6 receives and stores the workflow transmitted from the workflow creation device 5. The workflow execution device 6 then executes the stored workflow through manipulation by a workflow user, to control each of the devices of the information processing system ICT, that is, to execute operation management tasks. The workflow user is a manager of the information processing system ICT, and is also an executor of operation management tasks.

Hardware Configuration of the Workflow Creation Device and Workflow Execution Device

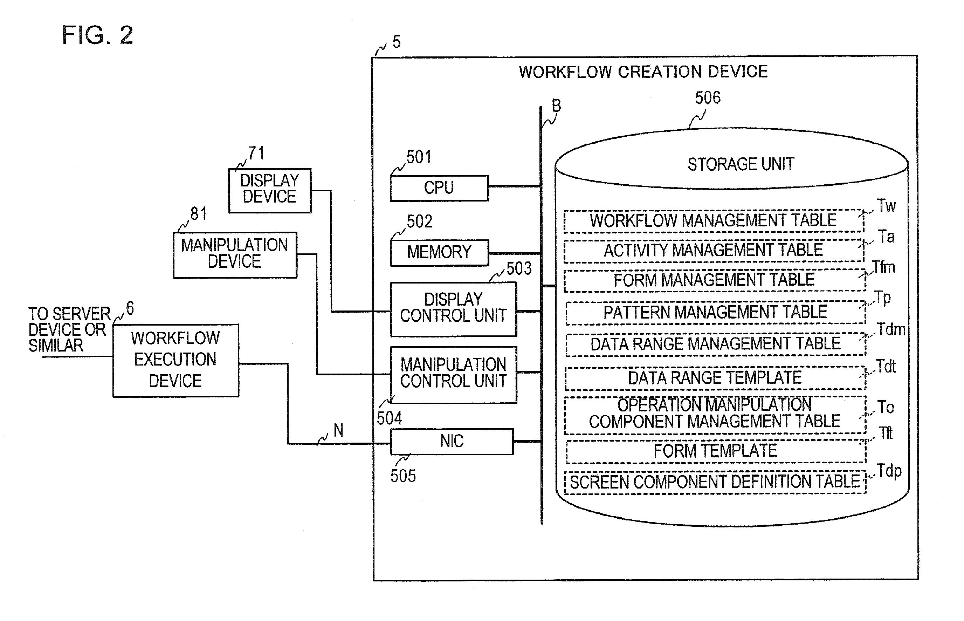

Fig. 2 is a block diagram illustrating one example of the hardware configuration of the workflow creation device 5 of Fig. 1.

In Fig. 2, the workflow creation device 5 has, interconnected via a bus B, a central processing unit (CPU) 501, memory 502, a display control unit 503, a manipulation control unit 504, a network interface card (hereafter called NIC) 505 connected to a network N, and a storage unit 506.

The CPU 501 is a computer (control unit) which controls the entirety of the workflow creation device 5. The memory 502 stores various control information, and data and similar computed in various information processing executed by the CPU 501.

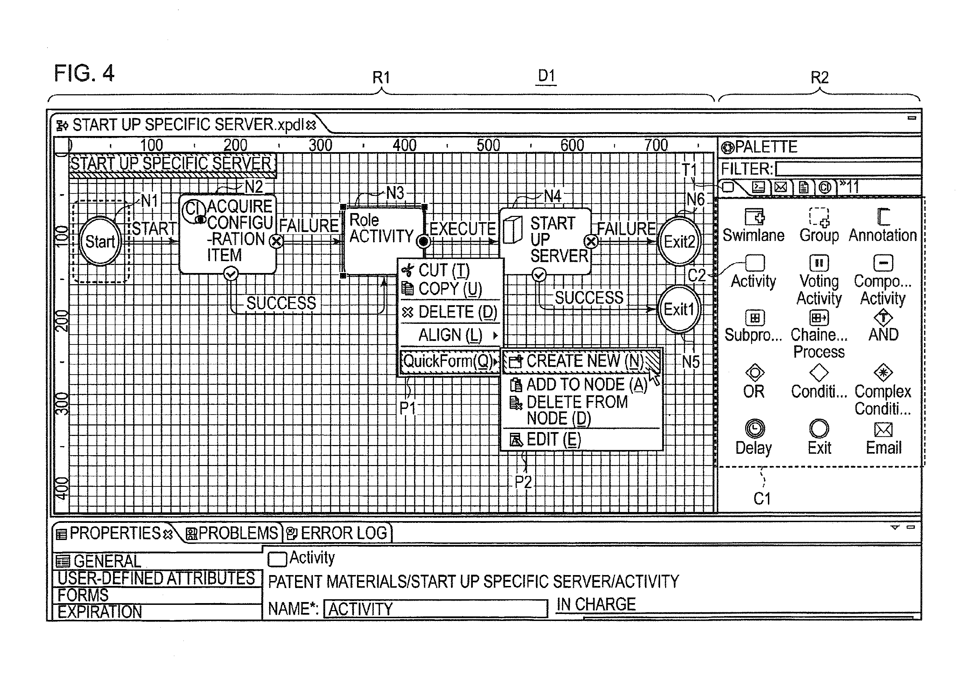

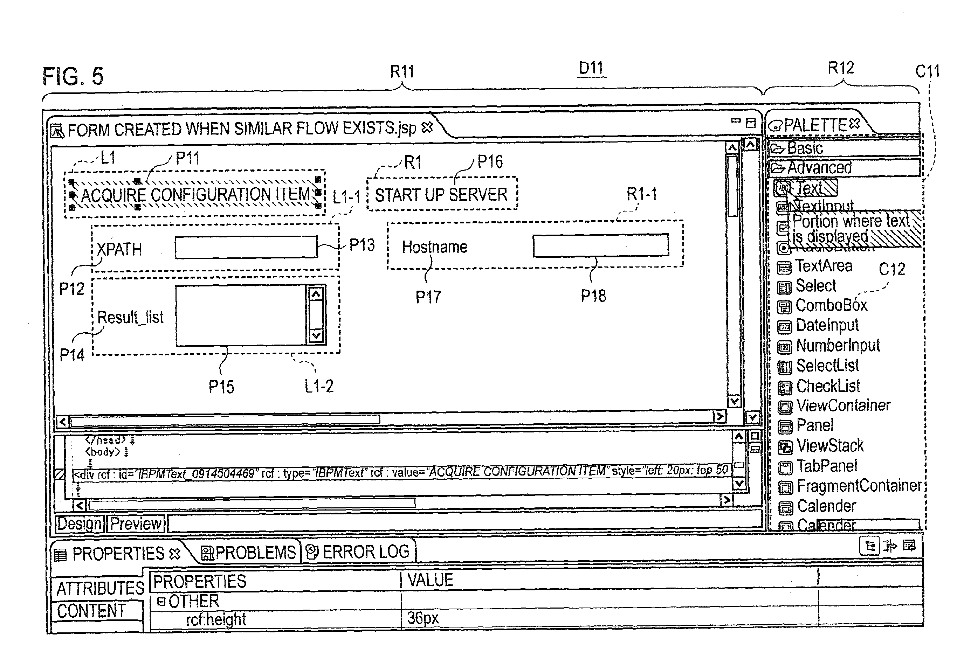

The display control unit 503 executes processing to display various images on the display device 71. The various images may be, for example, workflow creation screens explained in Fig. 4, and form creation screens for this workflow, explained in Fig. 5. The display device 71 is for example a liquid crystal display.

In response to manipulation instructions input from the manipulation device 81, the manipulation control unit 504 executes various processing according to the manipulation instructions. The manipulation device 81 is for example a keyboard and mouse.

The NIC 505 is a dedicated board to perform network communications, and functions as a data communication portion.

The storage unit 506 may be various storage devices, such as for example nonvolatile memory, or a hard disk drive (HDD) or other magnetic storage device. The storage unit 506 stores a workflow management table Tw, activity management table Ta, form management table Tfm, pattern management table Tp, data range management table Tdm, data range template Tdt, operation manipulation component management table To, form template Tft, and screen component definition table Tdp. These tables and templates are explained below.

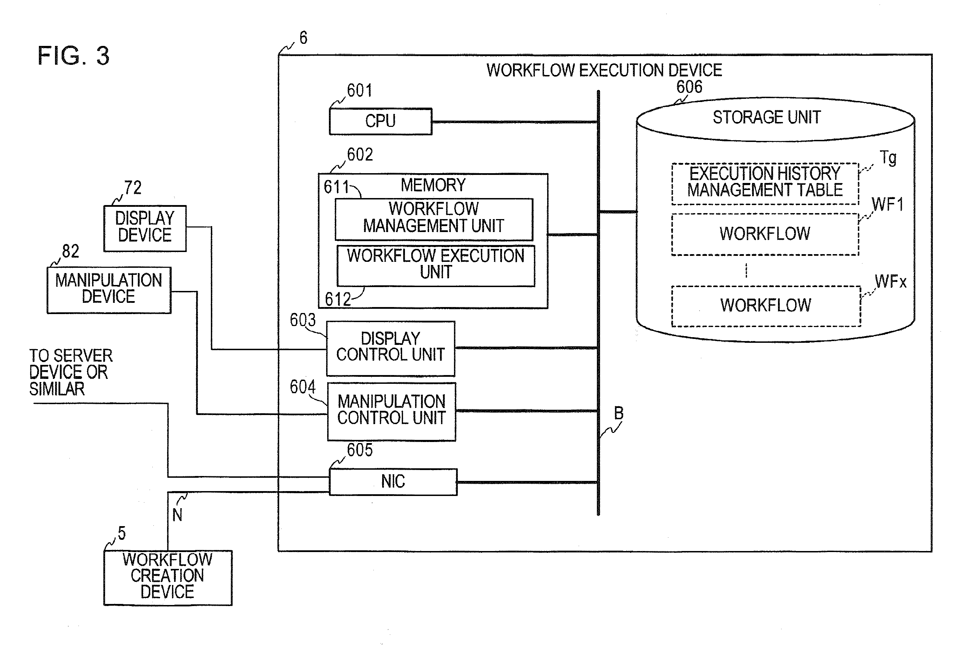

Fig. 3 is a block diagram illustrating one example of the hardware configuration of the workflow execution device 6 of Fig. 1.

In Fig. 3, the workflow execution device 6 has, interconnected via a bus B, a CPU 601, memory 602, display control unit 603, manipulation control unit 604, NIC 605 connected to the network N, and storage unit 606.

The CPU 601 is a computer which controls the entirety of the workflow execution device 6. The memory 602 stores various control information, and data and similar computed in various information processing executed by the CPU 601.

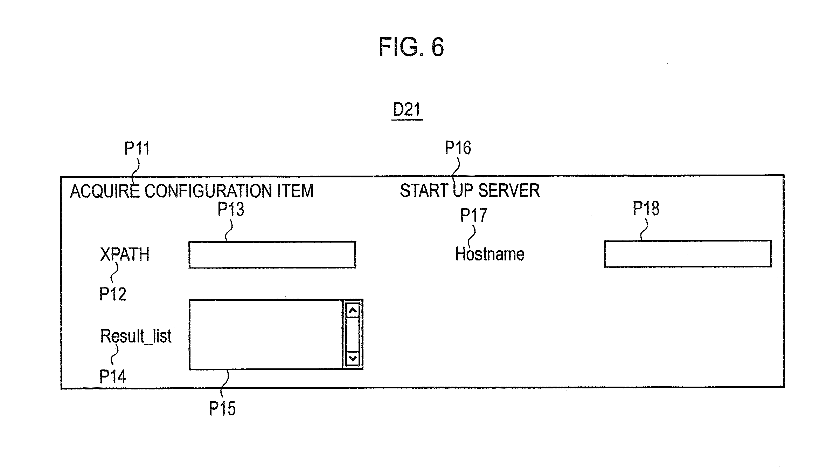

The display control unit 603 executes processing to display various images on the display device 72. The various images may be, for example, workflow form screens explained in Fig. 6. The display device 72 is for example a liquid crystal display. Below, workflow form screens are called form screens as appropriate.

In response to manipulation instructions input from the manipulation device 82, the manipulation control unit 604 executes various processing according to the manipulation instructions. The manipulation device 82 is for example a keyboard and mouse.

The NIC 605 is a dedicated board to perform network communications, and functions as a data communication portion.

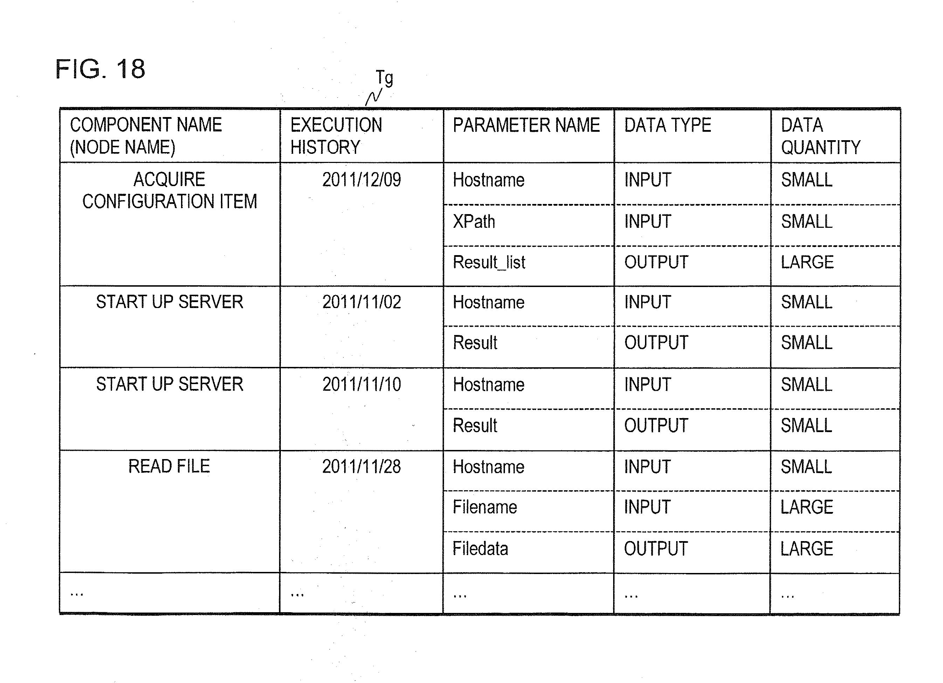

The storage unit 606 may be various storage devices, such as for example nonvolatile memory, or a magnetic storage device. The storage unit 606 stores an execution history management table Tg, and workflows WF1 to WFx created by the workflow creation device 5. The execution history management table Tg is explained in Fig. 18.

The workflow management unit 611 manages the workflows WF1 to WFx stored by the storage unit 606. The workflow execution unit 612 executes the workflows WF1 to WFx stored by the storage unit 606.

Programs which function as the workflow management unit 611 and workflow execution unit 612 are stored in for example the storage unit 606. At the time of startup, the CPU 601 reads these programs from the storage unit 606, and by expanding the programs in memory 602, causes these programs to function as software modules.

### Explanation of Workflows

Workflows are explained based on Fig. 4 to Fig. 7, and referring to Fig. 1 to Fig. 3.

Fig. 4 illustrates one example of a workflow creation screen displayed on the display device 71 of Fig. 2. A creation screen may also be called an editing screen.

Fig. 5 illustrates one example of a form creation screen displayed on the display device 71 of Fig. 2, in a case where there is a previously created workflow. This form is a console used for data input and confirmation jobs in a workflow, and functions as a user interface screen for the workflow.

Fig. 6 illustrates an example of a form screen automatically created by the workflow creation device 5 of Fig. 2.

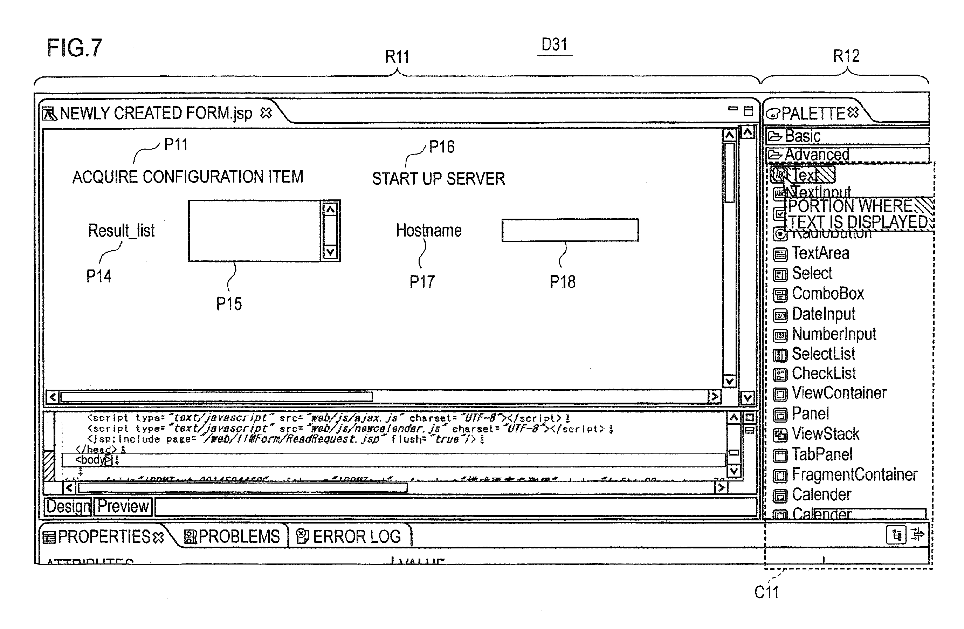

Fig. 7 illustrates an example of a workflow creation screen displayed on the display device 71 of Fig. 2, in a case where there is no previously created workflow.

The workflow creator (hereafter called the creator) manipulates the manipulation device 81 of Fig. 2, and instructs that a workflow creation screen be displayed on the workflow creation device 5. In response to this display instruction, the workflow creation device 5 displays a workflow creation screen on the display device 71 of the workflow creation device 5.

The creator uses this creation screen to perform workflow creation. An example of a creation screen is illustrated as the creation screen D1 in Fig. 4. The creation screen D1 mainly has a creation region R1 to perform workflow creation, and a node display region R2 to display various types of nodes. Here, a node is an item used to configure the workflow.

The creator manipulates the manipulation device 81 of Fig. 2, selects a node from the node group C1 in the node display region R2, and moves the selected node to the creation region R1 and arranges the node to create a workflow. A node is for example an activity node, indicated by the symbol C2. Activity nodes are explained below.

When the creator switches in sequence the tab T1 of the node display region R2, the workflow creation device 5 displays various node groups corresponding to the switched tab.

In Fig. 4, an example is illustrated in which a creator creates a workflow for server startup. In this workflow, the CMDB 2 of Fig. 1 is caused to execute server device search processing based on a search formula set by the creator or a search formula input by a workflow user (hereafter called a user), and receives the search results of the search performed based on this search formula. This workflow causes the user to select one among the search devices corresponding to the search results, and starts the selected server device. Hereafter a server device is called a server as appropriate, in conformance to the drawings. It is assumed that at this time, another workflow has already been created.

Further, the creator manipulates the manipulation device 81 of Fig. 2, and arranges a Start node N1, configuration item acquisition node (to acquire a configuration item) N2, activity node N3, server startup node (to start a server) N4, Exit1 node N5, and Exit2 node N6 in the creation region R1 in Fig. 4. At this time, the creator arranges arrows between nodes indicating the connection relations of the nodes. This workflow first acquires server configuration items, and executes startup of a specified server device from among the acquired configuration items.

Here, node types are explained. Nodes include nodes which indicate the content of jobs represented in the workflow. In the information processing system ICT of Fig. 1, nodes indicating job content are operation manipulation components representing job processing for a device which is a target for management. This device may for example be the CMDB 2, or the server device 1_1, or another information processing device. The operation manipulation component may be a manipulation system component performing manipulation of the device, or an acquisition system component which acquires information for the device. In other words, a manipulation system component is a type of operation manipulation component (node type) which performs manipulation of a device, and an acquisition system component is a type of operation manipulation component (node type) which acquires information for a device.

Nodes indicating the content of a job may also be activity nodes, which are nodes representing a job performed via a user or other personnel. In addition, nodes may also be nodes for identification, to indicate the start or end of a workflow or other information.

In the above-described example, the Start node N1 is a node for identification indicating the start of a workflow, and the Exit1 node N5 and Exit2 node N6 are nodes for identification indicating the end of a workflow. The configuration item acquisition node N2 is a node indicating job processing to acquire a configuration item from the CMDB 2 of Fig. 1, and is an operation manipulation component, and more precisely an acquisition system component. The activity node N3 is the above-described activity node; a form, described below, is added to this activity node. The server startup node N4 is a node indicating job processing to start up a specified server, and is an operation manipulation component, and more precisely a manipulation system component.

When arrangement of the above-described nodes is finished, the creator manipulates the manipulation device 81 of Fig. 2, selects an activity node N3 as illustrated in Fig. 4, displays in sequence list screens P1 and P2 on which are displayed the content of instructions which are pull-down menus, and issues an instruction for automated form creation to the workflow creation device 5. In Fig. 4, the creator selects "quick form" from the list screen P1, and by selecting "create new" from the list screen, issues an instruction for automated creation.

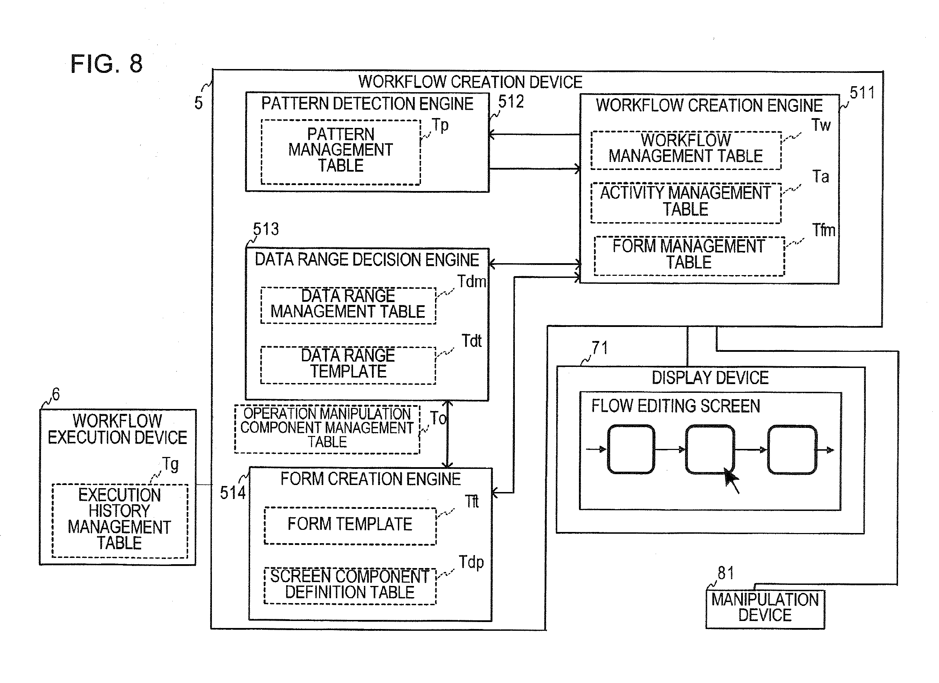

In response to this automated creation instruction, the workflow creation device 5 of Fig. 2 automatically creates a form (screen) in which screen components are arranged appropriately to the content of the workflow being created, based on an already-created form, or on a table or template used during initial creation. The workflow creation device 5 displays the form creation screen D11 of Fig. 5 on the display device 71. The content of automatic creation is explained in detail in Fig. 8.

The creation screen D11 mainly has a creation region R11 to create a form, and a component display region R12 to select screen components representing data input/output, arranged on the form screen.

The workflow creation device 5 of Fig. 2 displays the following screen components in the creation region R11 through the above-described automated creation. That is, in Fig. 5, these are the "acquire constituent item" label indicated by the symbol P11 and relating to the constituent item acquisition node N2 of Fig. 4, the "XPATH" label indicated by the symbol P12, the text box indicated by the symbol P13, the "Result_list" label indicated by the symbol P14, and the combo box indicated by the symbol P15. The labels are character strings. A text box is a screen component into which a character string or similar is input. A combo box combines a text display box and vertical scrollbar, and is a screen component in which, when the vertical scrollbar is manipulated, items displayed in the text display box can be scrolled.

The text box P13 is used to enable the user to input a search formula, described in XPATH (XML (Extensible Markup Language) Path Language). The input search formula is output to the CMDB 2 of Fig. 1. The combo box P15 is used to display the search results (Result_list) of searching the CMDB 2 based on the search formula input to the text box P13.

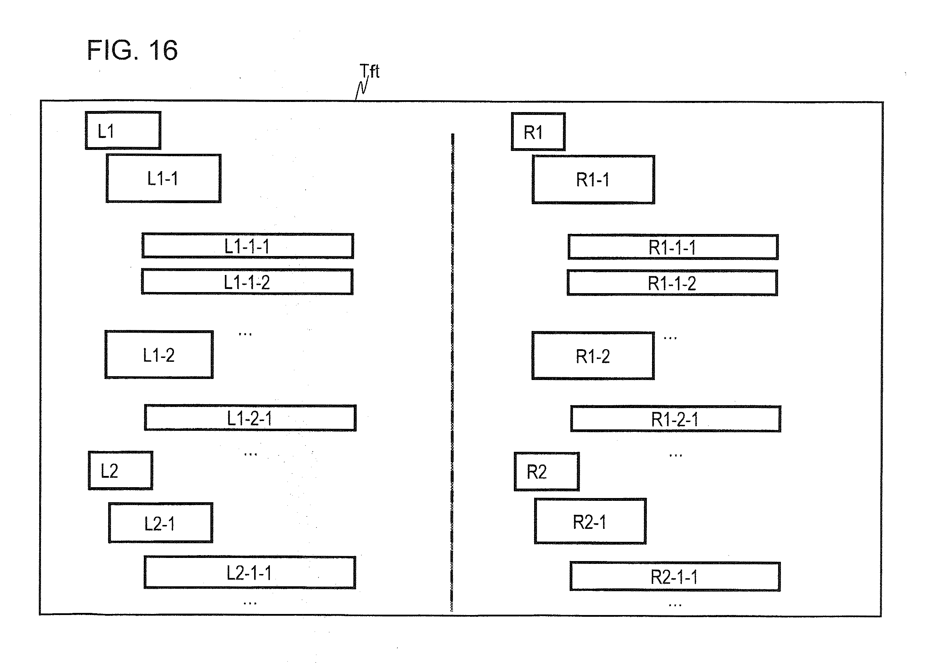

Further, the workflow creation device 5 of Fig. 2 displays the screen components described below in the creation region R11 by means of the above-described automated creation. That is, the workflow creation device 5 of Fig. 2 displays, in Fig. 5, the "start up server" label indicated by the symbol P16, the "Hostname" label indicated by the symbol P17, and the text box indicated by the symbol P18, are related to the server startup node N4 of Fig. 4. The text box P18 is used by the user to input the server name for startup, selected from within the combo box P15. The symbols L1, L1-1, L1-2, R1 and R1-1 are explained in Fig. 16.

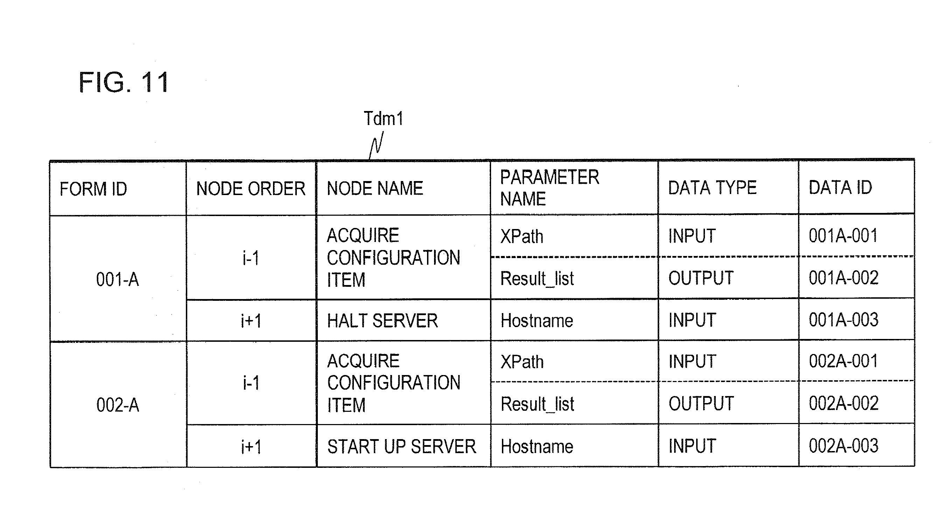

There are the following two methods for setting (inputting) the parameters of operation manipulation components (see Fig. 11), and in specific parameters for input. In other words, there are the following two methods to set data in operation manipulation components. Processing of data set by an operation manipulation component is executed according to the data. In a first method, the user uses a screen component (for example, a text box) or similar on a form screen to set data. In a second method, the creator sets the data in advance at the time of workflow creation. Here, it is assumed that the creator sets a search formulate in advance at the time of workflow creation.

The creator manipulates the manipulation device 81 of the workflow creation device 5 of Fig. 2, customizes screen components on the creation screen of the automatically created form, and upon manipulating the end button (not illustrated), the workflow creation device 5 creates a workflow for server startup. Here, customizing means, for example, modifying the positions in which screen components are arranged, and adding new screen components. The workflow creation device 5 transmits the created workflow to the workflow execution device 6 of Fig. 3.

The workflow creation device 5 creates a form screen D21, illustrated in Fig. 6, suited to the content of the workflow being created by means of the automated form creation explained above. The form screen D21 is a form corresponding to the form creation screen explained in Fig. 5.

When the automated form creation explained above is not performed, during form creation a form creation screen is displayed in which screen components are not displayed in the creation region R11 of the display screen D11 of Fig. 5. In this state, the creator himself manipulates the manipulation device 81 of the workflow creation device 5 of Fig. 2, to select a certain screen component which is suited to the workflow for server startup, for example a combo box (ComboBox) which is the screen component indicated by the symbol C12, from among the group C11 of screen components in the component display region R12, and moves and arranges the selected screen component in the creation region R11. However, for the creator himself to perform these manipulations and create a form screen from the beginning is extremely troublesome.

In particular, when numerous workflows must be created, the quantity of forms to be created is enormous, constituting an excessive burden for the creator. However, by means of this embodiment, forms in which screen components suited to the content of the workflow being created are created automatically, so that the job burden on the creator is alleviated.

### Workflow Execution Procedure

Workflow execution procedures are explained based on Fig. 6, and referring to Fig. 1 and Fig. 3. As explained above, the workflow creation device 5 of Fig. 2 transmits the created server startup workflow to the workflow execution device 6 of Fig. 3. The workflow management unit 611 of the workflow execution device 6 stores the received server startup workflow in the storage unit 606. The server startup workflow stored in the storage unit 606 is called the workflow WF1.

The user manipulates the manipulation device 82 to instruct the workflow execution device 6 to execute the workflow WF1. The workflow execution unit 612 of the workflow execution device 6 executes the workflow WF1 in response to this execution instruction. At this time, in order to display the execution state (state of progress) of the workflow WF1, the workflow execution unit 612 may display the same content as the nodes N1 to N6 illustrated in the creation region R1 of Fig. 4 on the display device 72, and may use arrows or similar to display the state of execution.

Based on the workflow WF1, the workflow execution unit 612 of the workflow execution device 6 of Fig. 3 transmits a search instruction command to the CMDB 2 of Fig. 1, instructing execution of search processing corresponding to the search formula set in advance. This search formula set in advance is the XPATH format search formula set by the creator at the time of the workflow creation, instruction the CMDB 2 to search for the host name (Hostname) of a server device within the information processing system ICT of Fig. 1.

The CMDB 2 receives the search instruction command, executes search processing corresponding to the search formula, and returns the search processing result to the workflow execution device 6 of Fig. 3.

After workflow execution, in the stage in which processing has advanced to activities, the workflow execution unit 612 of the workflow execution device 6 displays the form screen D21 of Fig. 6 on the display device 72. Here, the workflow execution unit 612 is assumed to display the form screen D21 of Fig. 6 on the display device 72 with the timing with which the search processing result is received.

The workflow execution unit 612 then displays the received search processing result in the combo box P15 of the form screen D21 of Fig. 6. The search processing result is, for example, "www.sample.com", "www2.sample.com", "www3.sample.com" and "www4.sample.com".

Next, the user manipulates the manipulation device 82 of the workflow execution device 6 of Fig. 3, selects the host name of the server device to be started up from among the search results, and inputs the host name into the text box P18 of the form screen D21 of Fig. 6. Then, based on the workflow WF1, the workflow execution unit 612 of the workflow execution device 6 of Fig. 3 transmits a startup command to the server device with the input host name, instructing startup of the server device. For example, suppose that the server device with the input host name is the server device 1_1 in Fig. 1. In this case, the workflow execution unit 612 of Fig. 3 transmits the startup command to the server device 1_1 of Fig. 1. Upon receiving the startup command, the server device 1_1 starts up, and enters the operating state. Through the processing explained above, the server startup workflow is executed.

In addition, the workflow execution unit 612 may display the form screen D21 of Fig. 6 on the display device 72 together with execution of the workflow WF1. When a search formula is not set by the creator, the user inputs into the text box P13 of the form screen D21 of Fig. 6 a search formula in XPATH format, instructing the CMDB 2 to search for a server device host name (Hostname) within the information processing system ICT of Fig. 1. Based on the workflow WF1, the workflow execution unit 612 of the workflow execution device 6 of Fig. 3 transmits a search instruction command to the CMDB 2 of Fig. 1, instructing that search processing by executed corresponding to the input search formula. An explanation of the subsequent processing has been given above, and so is omitted.

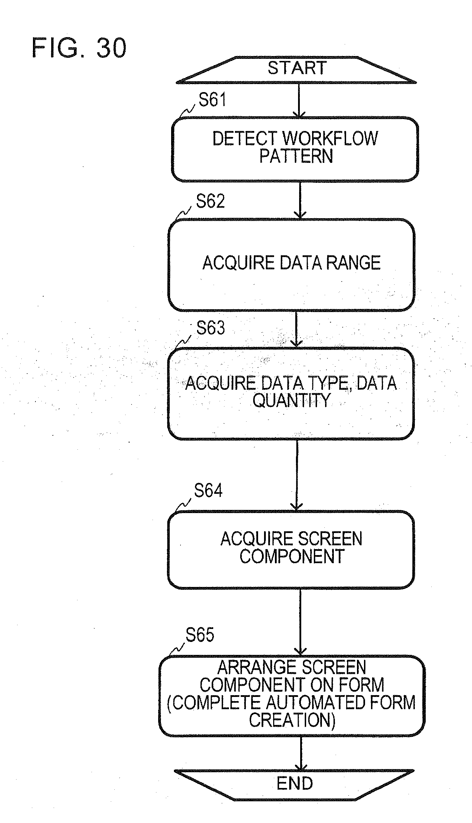

At the time of initial creation of a workflow (when no workflow has been created), the form creation screen D31 of Fig. 7 is displayed through automated form execution (creation). This creation screen D31 is explained in Fig. 30.

### Workflow Creation Device

The workflow creation device 5 of Fig. 2 is explained based on Fig. 8.

Fig. 8 is a block diagram illustrating software modules of the workflow creation device 5 of Fig. 2. In the explanation below, the same tables and forms as in Fig. 2 are assigned the same symbols. The workflow creation device 5 generates a workflow which represents operation procedures in the information processing system ICT by the connection of a plurality of nodes. Through this workflow, an information processing method is executed which automates operation tasks of the information processing system ICT.

The workflow creation engine (unit) 511 executes, for example, processing to display the workflow creation screen D1 of Fig. 4 and the form creation screen D11 of Fig. 5, and general workflow creation processing. As workflow creation processing, the workflow creation engine 511 creates a workflow including, for example, a first node which executes control processing in the information processing system ICT of Fig. 1, and a second node to which is added a form including screen components for input and output of information relating to this control processing. The first node is an operation manipulation component node, and the second node is an activity node.

In this workflow creation, the workflow creation engine 511 creates a workflow including operation manipulation component nodes, connected for example both before and after the activity node. The workflow being creates is called, as appropriate, the new workflow.

Here, control processing in the information processing system ICT is, specifically, control processing of information processing devices in the information processing system ICT illustrated in Fig. 1, such as for example the server device 1_1, CMDB 2, storage device 3, and network device 4. As one example of control processing, in the example explained in Fig. 6, processing is performed to transmit a search instruction command to the CMDB 2 causing the CMDB 2 to execute search processing and to transmit the search results, and to receive and display the search results. As another example of control processing, a startup command is transmitted to the server device 1_1, and the server device 1_1 starts up.

The pattern search engine 512 (unit) detects the pattern of a workflow. Workflow pattern detection is performed to judge the role of an activity node to which a form is to be added in a workflow being created. In this pattern detection, an inference is made by applying a predefined pattern on the basis of the content of nodes before and after the activity node.

The data range decision engine 513 (unit) decides the range of data arranged on the screen of a form of a workflow being created. A data range indicates the names, parameters and similar of operation manipulation components existing before and after an activity node which is the target for form addition in the workflow being created.

The form creation engine 514 selects screen components to arrange on the form screen for the workflow being created based on data ranges decided by the data range decision engine 513, for example, and creates the form.

The workflow creation device 5 in this embodiment executes the following information processing method. Here, the pattern detection engine 512 detects the pattern of a new workflow, to be newly created, based on a pattern management table Tp which stores workflow patterns. A pattern management table Tp is an example of first information which stores workflow patterns.

Next, the data range decision engine 513 and form creation engine 514 decide the screen components to arrange on the screen of the form of the new workflow and the positions at which screen components are arranged on the form screen, based on the detected pattern of the new workflow and the content of control processing of the first node in the new workflow. The form creation engine 514 then arranges the screen components thus decided at the positions for arrangement thus decided. Hence a form can be generated on which screen components suited to the content of the workflow being created are arranged.

Programs (program code) functioning as the workflow creation engine 511, pattern detection engine 512, data range decision engine 513 and form creation engine 514 are for example stored in the storage unit 506 of Fig. 2. The CPU 501 reads these programs from the storage unit 506, and by expanding the programs in memory 502, causes these programs to function as software modules. One example of the storage unit 506 is a recording non-transitory medium which can be read by a computer, and on which are recorded programs which cause the computer to execute digital signal processing. In addition, programs which function as the workflow creation engine 511, pattern detection engine 512, data range decision engine 513 and form creation engine 514 may be recorded on a Compact Disc Read Only Memory (CD-ROM), Digital Versatile Disc (DVD), Universal Serial Bus (USB) memory, or other transportable recording medium. When the above-described programs are recorded on the above-described transportable recording medium, the workflow creation device 5 has a readout device which reads the above-described programs recorded on the above-described transportable recording medium.

### Tables for Automated Creation

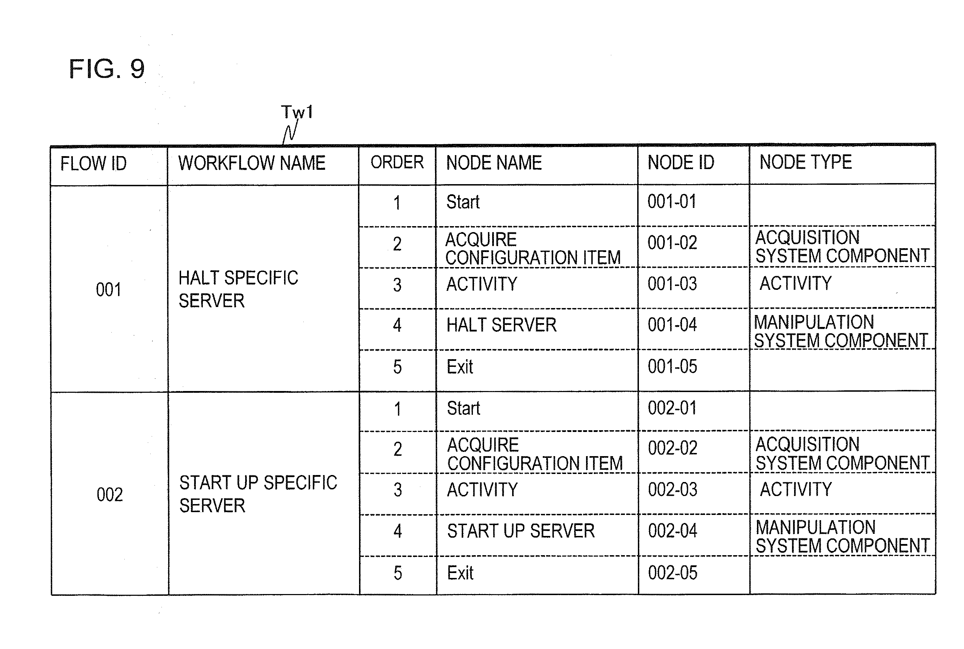

Tables necessary for automated creation of forms are explained, based on Fig. 9 to Fig. 15.

### Workflow Management Table

Fig. 9 illustrates one example of a workflow management table Tw1 to manage a workflow. The workflow management table Tw1 is stored in the storage unit 506 of Fig. 2 as the workflow management table Tw of Fig. 2 and Fig. 8.

In the workflow management table Tw1 of Fig. 9, the flow ID column stores identifiers (IDs) of workflows which are targets for management, the workflow name column stores workflow names, and the order column stores the order of a series of nodes in the workflow. By means of the nodes and the order of the series of nodes, the connections of the plurality of nodes in an operation procedure of the information processing system ICT are represented.

In the workflow management table Tw1, the node ID column stores node identifiers, the node name column stores node names, and the node type column stores node types. The workflow management table Tw1 is one example of second information which stores first node order information taking as reference an activity node (node name "activity") and the first node names in a previously created workflow. The workflow management table Tw1 stores, for example, in the previously created workflow indicated by the flow ID "001", taking as reference the activity of the order (order information) "3", the order information "2" of the first node which is one before (on the upper side in the figure), and the name of the node, "acquire configuration item". This workflow management table Tw1 further stores, taking as reference the activity, the order information "4" of the first node which is one after (on the lower side in the figure), and the node name "halt server".

The workflow creation engine 511 of the workflow creation device 5 in Fig. 8 previously created a workflow which halts a specific server (hereafter called as appropriate a server halting workflow). This server halting workflow causes the CMDB 2 of Fig. 1 to execute search processing for server devices based on a search formula set in advance by the creator, receives the search results of the search based on this search formula, causes the user to select from among the server devices corresponding to the search results, and halts the selected server device. Specifically, in the workflow creation screen D11 of Fig. 4, the server startup node N4 of Fig. 4 is a workflow with the server halting node replaced.

In this case, when creating the server halting workflow, based on the content of this workflow creation screen, the workflow creation engine 511 stores "001" in the flow ID column of the workflow management table Tw1, stores "halt a specific server" in the workflow name column, and stores "1" to "5", indicating the order of the nodes in the node name column, in the order column. The workflow creation engine 511 stores in sequence, in the node name column, the names of the nodes constituting this server halting workflow. Here, the workflow creation engine 511 stores "Start", "acquire configuration item", "activity", "halt server", and "Exit" in the node name column, and in the node ID column, stores the node IDs "001-01" to "001-05" identifying the nodes in the node name column. The numeral on the left side of " - " of the node IDs is the flow ID.

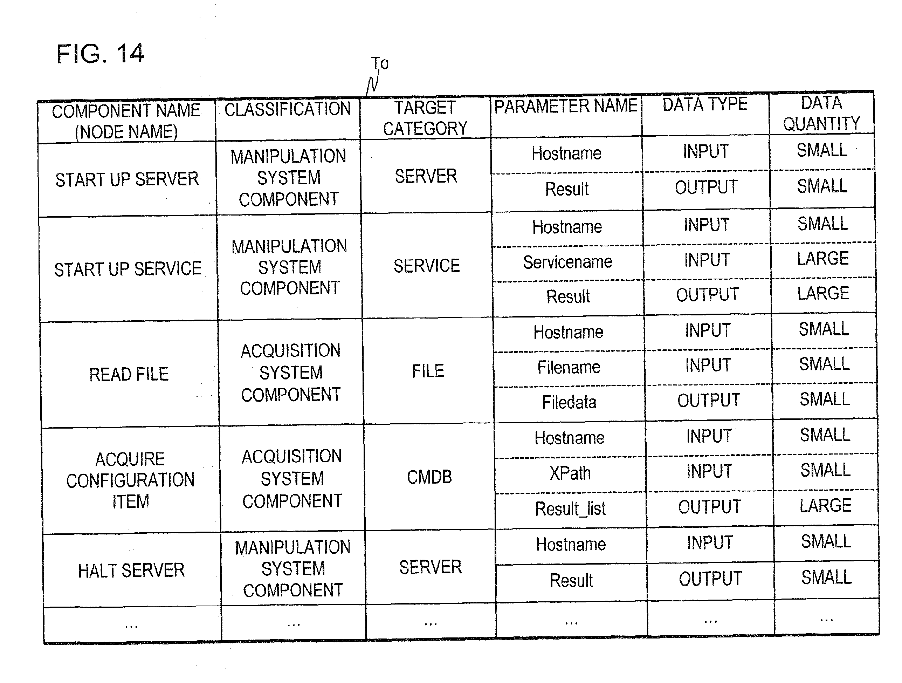

The workflow creation engine 511 of Fig. 8 stores, for the node name "activity", the node type "activity" corresponding to this node name. The workshop creation engine 511 further acquires, from the operation manipulation component management table To of Fig. 14, categories corresponding to the node names stored in the node name column other than the node name "activity" in the workflow management table Tw1, and stores these in the node type classification as node types. When a classification cannot be acquired, the column is left blank.

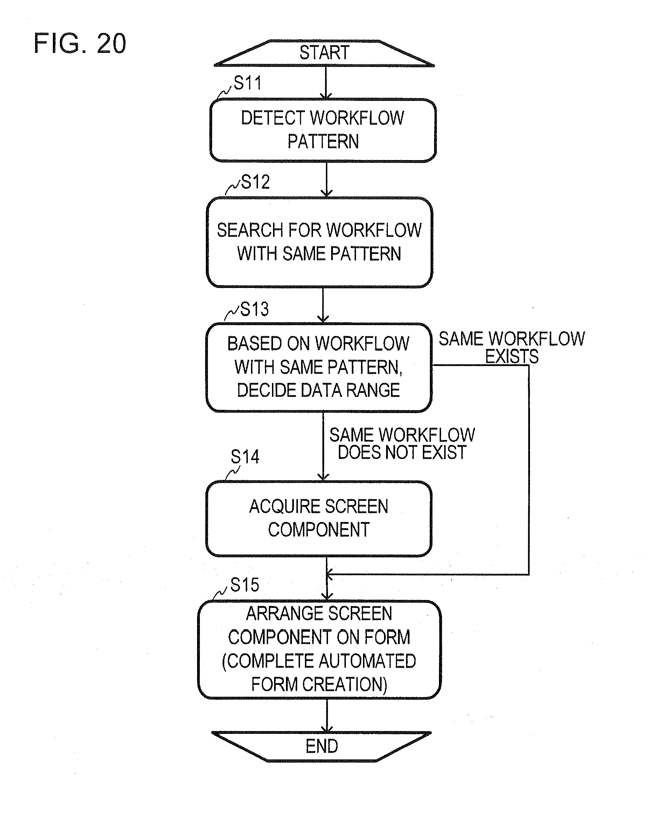

In the workflow management table Tw1 of Fig. 9, node names other than the node name "activity" are "Start", "acquire configuration item", "halt server", and "Exit". In this case, the node names "Start" and "Exit" are not stored in the component name (node name) column in the operation manipulation component management table To of Fig. 14. Hence the workflow creation engine 511 of Fig. 8 cannot acquire a classification, and so leaves blanks in the node type column corresponding to the node names "Start" and "Exit". On the other hand, the node names "acquire configuration item" and "halt server" are stored in the component name column in the operation manipulation component management table To of Fig. 14, in which "acquisition component" and "manipulation system component" are stored in the classification column corresponding to these component names. Hence in the workflow management table Tw1 of Fig. 9, the workflow creation engine 511 of Fig. 8 stores "acquisition system component" in the node type column corresponding to the node name "acquire configuration item", and stores "manipulation system component" in the node type column corresponding to the node name "halt server". The content of the flow ID "002" is explained in Fig. 20.

### Activity Management Table

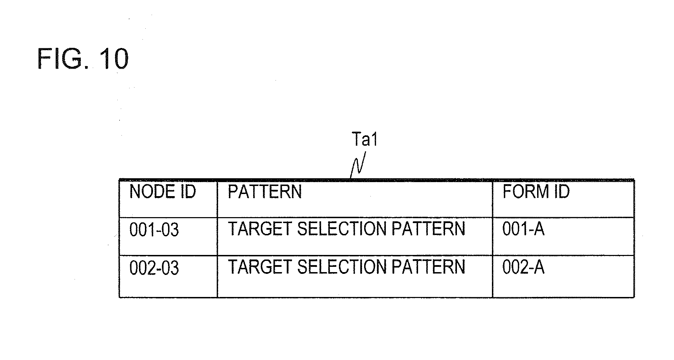

Fig. 10 illustrates one example of an activity management table Ta1, which manages activity of a workflow. The activity management table Ta1 is stored in the storage unit 506 of Fig. 2 as the activity management table Ta of Fig. 2 and Fig. 8.

In the activity management table Ta1 of Fig. 10, the node ID column stores IDs of activity nodes which are targets for management. The pattern column stores the patterns of workflows having node IDs stored in the node ID column, and the form ID column stores form IDs identifying forms to which activity is added.

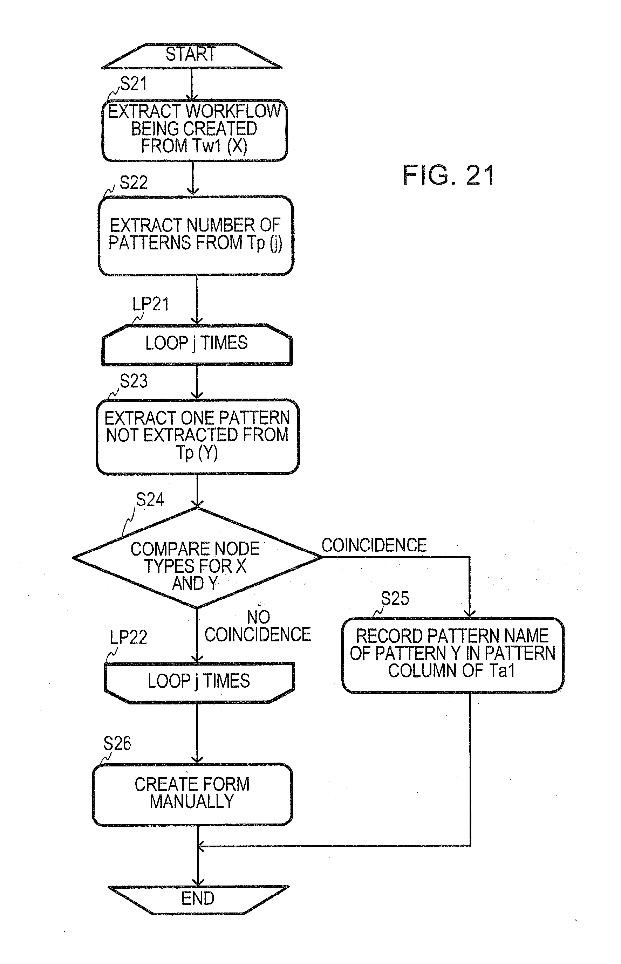

Here, when creating a server halting workflow, the workflow creation engine 511 stores, in the node ID column of the activity management table Ta1, the node ID "001-03" of the activity of the flow ID "001" (see Fig. 9) which identifies the workflow. In the pattern column is stored the pattern "target selection pattern" of the server halting workflow detected by the pattern detection engine 512, described below, and in the form ID column, the form ID "001-A" is stored. The content of the node ID "002-03" is explained in Fig. 21.

### Data Range Management Table

Fig. 11 illustrates an example of a data range management table Tdm1 which manages data ranges. The data range management table Tdm1 is stored in the storage unit 506 of Fig. 2 as the data range management table Tdm of Fig. 2 and Fig. 8.

In the data range management table Tdm1 of Fig. 11, the form ID column stores identifiers (IDs) which identify forms. The node order column stores the order of nodes in the workflow, taking the activity as reference. In the order column, the order number of nodes before and after the activity are indicated by "i-n" and "i+n" respectively (where n is an integer equal to or greater than 1).

The node name column stores the names of nodes indicated by the order number in the node order column. The parameter name column stores the names of parameters corresponding to the nodes. The data type column stores data types (also called parameter types), which define whether a parameter stored in the parameter name column is a parameter for input data or a parameter for output data. The data ID column stores identifiers which identify the parameters stored in the parameter name column.

When creating the server halting workflow, the data range decision engine 513 of Fig. 8 stores, in the form ID column of the data range management table Tdm1 of Fig. 11, an identifier "001-A" which identifies the form to which the activity of the workflow is added. Further, the data range decision engine 513 extracts the names (node names) of nodes before and after, taking as reference the node name "activity" corresponding to the flow ID "001" in the workflow management table Tw1 of Fig. 9, and stores the node names in the node name column of the data range management table Tdm1 of Fig. 11. In the above-described example, the data range decision engine 513 extracts from the workflow management table Tw1 of Fig. 9 the "acquire configuration item" of node ID "001-02" and "halt server" of node ID "001-04", taking as reference the activity of node ID "001-03", and stores these values in the node name column of the data range management table Tdm1 of Fig. 11.

Then, the data range decision engine 513 of Fig. 8 stores in the parameter name column of the data range management table Tdm1 of Fig. 11 the parameters "XPath" and "Result_list" corresponding to the node name "acquire configuration item" in the node name column, and stores the parameter "Hostname" corresponding to the node name "halt server" in the node name column. And, the data range decision engine 513 stores "input", "output" and "input", corresponding to the parameters "XPath", "Result_list" and "Hostname", in the data type column, and stores the data IDs "001A-001" to "001A-003" identifying the parameters in the parameter name column. The character string "001A" on the left side of the dash "-" in the data IDs corresponds to the form ID "001-A".

Here, the parameter "XPath" is a parameter of the input search formula which is necessary when executing configuration item acquisition processing for the CMDB 2 of Fig. 1, and the parameter "Result_list" is an output parameter to output and display the search results from the CMDB 2. The parameter "Hostname" is an input parameter to specify the server target which is the target for halting. Details of the above-described storage processing are explained in Fig. 30, and the content of the form ID "002-A" is explained in Fig. 20.

### Form Management Table

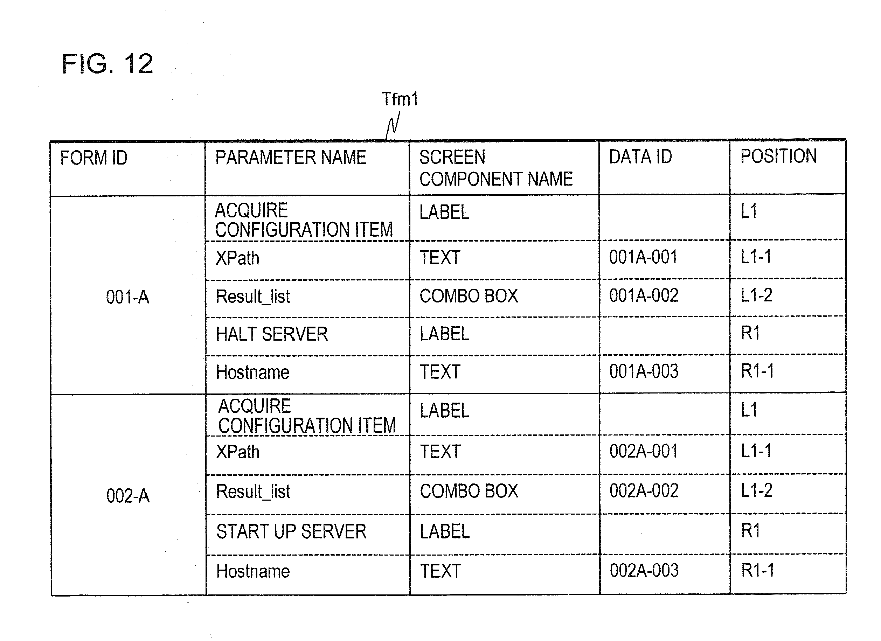

Fig. 12 illustrates an example of a form management table Tfm1 which manages forms. The form management table Tfm2 is stored in the storage unit 506 of Fig. 2 as the form management table Tfm of Fig. 2 and Fig. 8.

In the form management table Tfm1 of Fig. 12, the form ID column stores identifiers which identify forms which are targets for management, the parameter name column stores parameters corresponding to screen components which are arranged on (appear on) a form screen, and the screen component name column stores the names of screen components corresponding to the parameters. The data ID column stores data IDs which are stored in the data ID column in Fig. 11. The position column stores identifiers which indicate the positions on forms at which screen components in the screen component name column are arranged.

The form management table Tfm1 is an example of third information which stores the names and arrangement positions of screen components arranged on a form screen of a previously created workflow.

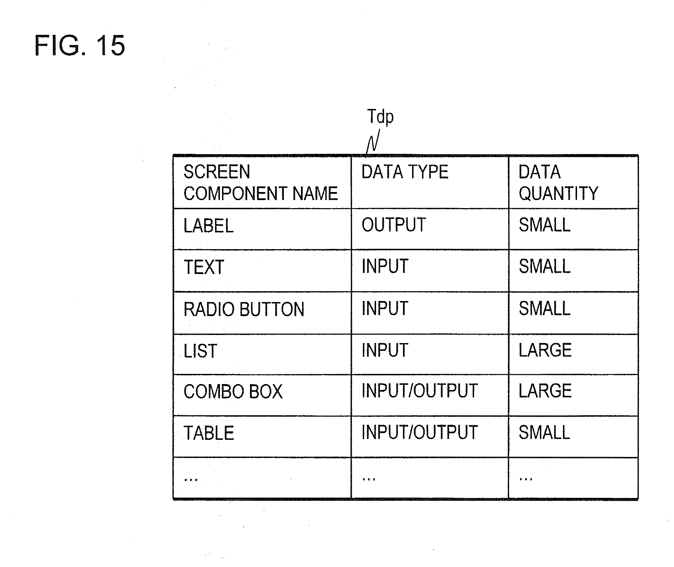

In Fig. 12, the form creation engine 514 of Fig. 8 stores the form ID "001-A" in the form ID column, and stores "acquire configuration item", "XPath", "Result_list", "halt server" and "Hostname" in the parameter name column. The form creation engine 514 stores "label", "text", "combo box", "label" and "text" in the screen component name column, and in the data ID column, stores the data IDs "001A-001", "001A-002" and "001A-003" which identify the parameter names "XPath", "Result_list" and "Hostname" in the parameter name column. In the position column, "L1", "L1-1", "L1-2", "R1", and "R1-1" are stored as position information which is referenced when specifying the position on the form at which screen components are arranged. Screen component names are explained in Fig. 15. Position information in the position column is explained in Fig. 16. The content of the form ID "002-A" is explained in Fig. 20 and Fig. 21.

The management tables of Fig. 9 to Fig. 12 explained above are tables which are updated each time a workflow is newly created.

### Pattern Management Table Tp

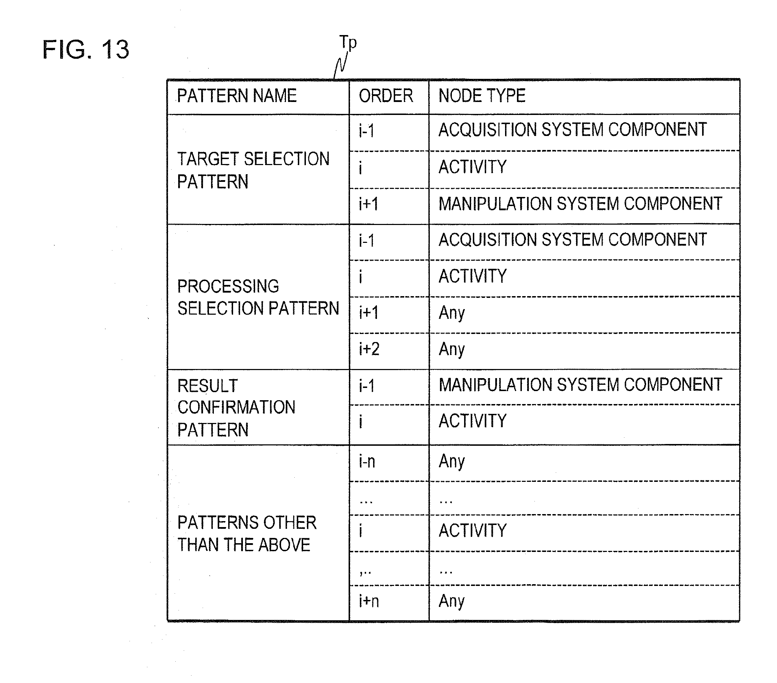

Fig. 13 illustrates an example of a pattern management table Tp to detect the pattern of the workflows in Fig. 2 and Fig. 8. The pattern management table Tp is a first table to store workflow patterns, and is referenced when searching for workflow patterns.

In the pattern management table Tp, the pattern name column stores a "target selection pattern", "processing selection pattern", "result confirmation pattern", and patterns other than these ("patterns other than the above"). The order column stores the order of nodes in the workflow, taking as reference the activity. In the order column, the activity order is taken to be "i", and the order number of nodes before and after the activity is indicated by "i-n" and "i+n" respectively (where n is an integer equal to or greater than 1). In the pattern management table Tp, the node type column stores the types of the series of nodes in each pattern.

Here, workflow patterns are explained. Workflow patterns are mainly a target selection pattern, processing selection pattern, result confirmation pattern, and other patterns.

The target selection pattern is a pattern which, in workflow execution processing, performs various manipulation in processing executed subsequent to an activity based on information acquired in processing executed prior to the target activity. Hence on the form screen of the target activity, the result of processing executed prior to the activity is displayed, and input information necessary to processing executed subsequent to the activity can be set.

The processing selection pattern is a pattern which, in workflow execution processing, selects processing to be caused to be executed subsequent to an activity based on information acquired in processing executed prior to the target activity. Hence on the form screen of the target activity, the result of processing executed prior to the activity is displayed, and input information to select processing to be caused to be executed subsequent to the activity can be set.

The result confirmation pattern is a pattern which, in workflow execution processing, confirms (displays) the result of manipulation in processing executed prior to the target activity. For example, the result may be that manipulation ended successfully, or that manipulation ended in failure. For this reason, the result of processing executed prior to the activity is displayed on the form screen of the target activity. In the case of this result confirmation pattern, one manipulation system component (node) is connected before the activity.

As other patterns, for example there are application patterns and approval patterns. An application pattern is a pattern in which an activity which is one after a target activity is notified of the processing content and processing result of the entirety or a portion of the workflow. Hence input information necessary for all or a portion of the processing included in the workflow is set on, or processing results are displayed on, the form screen of the target activity. An approval pattern is a pattern in which the content set by an activity one before the target activity is confirmed, and whether subsequent processing is to be executed is determined. Hence values set in input information necessary for all or a portion of the processing included in the workflow is displayed on, or processing results are displayed on, the form screen of the target activity.

In the pattern management table Tp, the orders "i-1", "i" and "i+1" are stored in the order column corresponding to the pattern name "target selection pattern", and "acquisition system component", "activity" and "manipulation system component" are stored in the node type column corresponding to the respective orders. The orders "i-1", "i", "i+1" and "i+2" are stored in the order column corresponding to the pattern name "processing selection pattern", and "acquisition system component", "activity", "Any" and "Any" are stored in the node type column corresponding to the respective orders. In the node type column, "Any" indicates an arbitrary node type.

The orders "i-1" and "i" are stored in the order column corresponding to the pattern name "result confirmation pattern", and "manipulation system component" and "activity" are stored in the node type column corresponding to the respective orders. The orders "i-n", ..., "i", ..., "i+n" are stored in the order column corresponding to the pattern name "patterns other than the above", "activity" is stored in the node type column corresponding to the order "i", and "Any" is stored in the order column elsewhere.

### Operation Manipulation Component Management Table To

Fig. 14 illustrates an example of an operation manipulation component management table To which manages the operation manipulation components in Fig. 2 and Fig. 8.

The operation manipulation component management table To of Fig. 14 is a table which stores various information relating to operation manipulation components. In the operation manipulation component management table To, the component names of operation manipulation components are stored in the component name (node name) column. The component names of the operation manipulation components are also the names of nodes, as explained in Fig. 4. In the classification column is stored information as to whether an operation manipulation component is a manipulation system component or an acquisition system component. The categories are also node types.

The target category column stores the category corresponding to the component name (node name) in the component name column.

In the parameter name column are stored the names of parameters corresponding to the component names in the component name column. The parameters are parameters corresponding to the content of the control processing in the first node. In the data type column are stored the types of parameters in the parameter name column, and specifically, "input" or "output" is stored indicating whether the parameter is an input parameter or an output parameter. The data quantity column stores "large" or "small", indicating whether the quantity of data input to each parameter, or whether the quantity of data output from each parameter, is greater than or less than a prescribed data quantity (for example, 10 kbytes).

The operation manipulation component management table To is an example of fourth information which stores categories corresponding to the names of first nodes, and is an example of fifth information which is stored in association with the parameter names corresponding to the content of control processing in the first node, the parameter type (data type), and the quantity of data input/output via the parameter. The category corresponding to the name of the above-described first node is the category of the target for control processing of the above-described first node.

In the operation manipulation component management table To, "manipulation system component" is stored in the classification column, "server" is stored in the target category column, and "Hostname" and "Result" are stored in the parameter name column, corresponding to the component name (node name) "start up server". Here, the parameter name "Hostname" indicates an input parameter to specify the server device which is the startup target, and the parameter name "Result" indicates an output parameter to output the startup result, indicating whether startup of the server device has succeeded or failed. Corresponding to these parameters, "input" and "output" are stored in the data type column, and "small" and "small" are stored in the data quantity column.

In the operation manipulation component management table To, "manipulation system component" is stored in the classification column, "service" is stored in the target category column, and "Hostname", "Servicename" and "Result" are stored in the parameter name column, corresponding to the component name (node name) "start up service". Here, a service is for example application installation, or automated setting of an Operating System (OS). The parameter name "Hostname" indicates an input parameter to specify the information processing device to be caused to execute the service which is the startup target, the parameter name "Servicename" indicates the input parameter used to specify the name of the service which is the startup target, and the parameter name "Result" indicates the output parameter which outputs the startup result, indicating whether service startup has succeeded or failed. Corresponding to these respective parameters, "input", "input" and "output" are stored in the data type column, and "small", "large" and "large" are stored in the data quantity column.

In the operation manipulation component management table To, corresponding to the component name (node name) "read file", "acquisition system component" is stored in the classification column, "file" is stored in the target category column, and "Hostname", "Filename" and "Filedata" are stored in the parameter name column. The parameter name "Hostname" indicates an input parameter to specify the storage device in which the file to be read out is stored, the parameter name "Filename" indicates an input parameter to specify the name of the file to be read out, and the parameter name "Filedata" indicates an output parameter to output the read-out file. Corresponding to these respective parameters, "input", "input" and "output" are stored in the data type column, and "small", "small" and "small" are stored in the data quantity column.

In the operation manipulation component management table To, corresponding to the component name (node name) "acquire configuration item", "acquisition system component" is stored in the classification column, "CMDB" is stored in the target category column, and "Hostname", "XPath" and "Result_list" are stored in the parameter name column. The parameter name "Hostname" indicates an input parameter to specify the CMDB which acquires a configuration item, the parameter name "XPath" indicates an input parameter to specify the search formula of the configuration item to acquire, and the parameter name "Result_list" indicates an output parameter to output search results. Corresponding to the respective parameters are stored "input", "input" and "output" in the data type column, and "small", "small" and "large" in the data quantity column.

In the operation manipulation component management table To, corresponding to the component name (node name) "halt server", "manipulation system component" is stored in the classification column, "server" is stored in the target category column, and "Hostname" and "Result" are stored in the parameter name column. Here, the parameter name "Hostname" indicates an input parameter to specify the server device which is the target for halting, and the parameter name "Result" indicates an output parameter to output the halting result, indicating whether the server device halting was a success or a failure. Corresponding to the respective parameters, "input" and "output" are stored in the data type column, and "small" and "small" are stored in the data quantity column.

### Screen Component Definition Table Tdp

Fig. 15 illustrates an example of a screen component definition table Tdp which defines screen components arranged on the form screen in Fig. 2 and Fig. 8.

The screen component definition table Tdp of Fig. 15 stores various information related to screen components. A screen component is a component which defines the screen configuration so as to define the representation of data arranged on the form screen. There are screen component types for input, for output, and for input/output, and there are different screen components according to the quantity of data that can be input or output.

In the screen component definition table Tdp, the screen component name column stores screen components arranged on the form screen. The data type column stores data types corresponding to the screen component names in the screen component name column. Data types are also parameter types corresponding to the screen components. The data type is information indicating whether a screen component is a screen component such as a text box or radio button or similar, which a user uses to input data (with "input" as the data type), or is a screen component such as a label or similar, used to output (display) data to the user (data type "output"). When the data type is specified as "input/output", the data type indicates that data is either input or output, as well as both input and output. The data quantity column stores the data quantity corresponding to the screen component name in the screen component name column. This data quantity stores information indicating whether the quantity of data input to the screen component is larger than ("large") or smaller than ("small") a prescribed data quantity (for example, 10 kbytes), or whether the quantity of data output from the screen component is larger than ("large") or smaller than ("mall") a prescribed data quantity.

The screen component definition table Tdp is an example of sixth information, which stores screen component names in association with parameter types and data quantities.

The screen component name column stores "label", "text", "radio button", "list", "combo box", and "table". The data type column stores, corresponding to the respective screen components in the screen component name column, "output", "input", "input", "input", "input/output" and "input/output". The data quantity column stores, corresponding to the respective screen components in the screen component name column, "small", "small", "small", "large", "large" and "small".

The component name "label" indicates information such as a character string or similar which is arranged on a form screen, "text" indicates a text box into which a character string or similar is input, and "radio button" indicates a component in which one button is selected from among a plurality of buttons. "List" (also called a list box) indicates a list for item selection, and "combo box" indicates a combination of a text display box and a vertical scroll, and is a screen component in which, when the vertical scroll is manipulated, items displayed in the text display box are scrolled. "Table" has functions similar to those of a combo box, but the quantity of text information displayed in a text display box is small, and in a text display box, displayed items cannot be scrolled.

### Template for Automated Creation

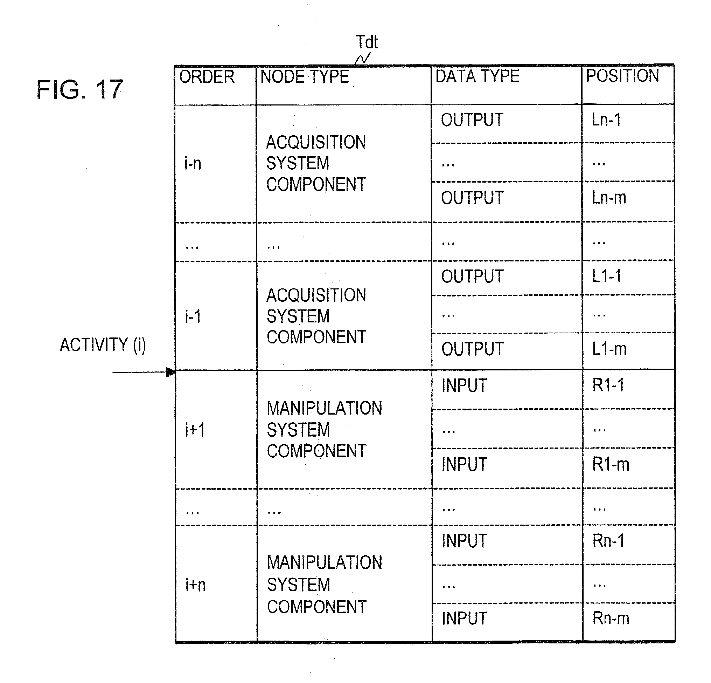

A template for automated creation is explained based on Fig. 16 and Fig. 17.

Fig. 16 illustrates an example of a form template Tft which is referenced when arranging screen components on the form screen in Fig. 2 and Fig. 8.

The form template Tft of Fig. 16 is a schematic representation of a template which stores position information, which is referred to when specifying at which positions in the display region R11, explained in Fig. 5 and Fig. 7, screen components are to be arranged. This template corresponds to the display region R11 of the form creation screen explained in Fig. 5 and Fig. 7.

In the form template Tft, the coordinates of the four vertices of the rectangular frames indicated by the symbols L1, L1-1, L1-1-1, L1-1-2, L1-2, L1-2-1, L2, L2-1, L2-1-1, R1, R1-1, R1-1-1, R1-1-2, R1-2, R1-2-1 R2, R2-1 and R2-1-1, for example, correspond to coordinates in the creation region R11 in the form creation screen D11 of Fig. 5. In other words, the form template Tft has coordinate information for the four vertices of each of the rectangular frames in the template, and this coordinate information indicates the coordinates within the creation screen of the above-described form.

For example, the regions of the rectangles specified by the symbols L1, L1-1, L1-2, R1 and R1-1 correspond to the regions (dashed lines) of the rectangles indicated by the symbols L1, L1-1, L1-2, R1 and R1-1 in the form creation screen D11 of Fig. 5. In the template Tft and the form creation screen D11 of Fig. 5, region positions and sizes are exaggerated in the explanation.

Fig. 17 illustrates an example of a data range template Tdt which is referenced when first creating a workflow, and when the same workflow or a similar workflow is not stored, in Fig. 2 and Fig. 8.

The data range template Tdt of Fig. 17 is a data range template which is referenced when first creating a workflow, for example. In the data range template Tdt, the order column stores the order of nodes in the workflow, taking as reference the activity (i). In the order column, the order numbers of nodes before and after the activity are indicated respectively by "i-n" and "i+n" (where n is an integer equal to or greater than 1). The node type column stores the types of nodes corresponding to the order numbers. In Fig. 17, acquisition system components are stored on the upper side (i-1, ..., i-n), taking as reference the activity i, and manipulation system components are stored on the lower side (i+1, ..., i+n), taking as reference the activity i.

The data type column stores data types, which define whether the acquisition system component or manipulation system component stored in the node type column is for input data or for output data. There are two data types, "input" and "output", in Fig. 17; "output" is stored for acquisition system components, and "input" is stored for manipulation system components. The position column stores identifiers indicating the positions on the form screen at which screen components are arranged. The identifiers correspond to the symbols (L1, L1-1, and similar) within the form template Tft of Fig. 16.

The data range template Tdt is an example of seventh information, which stores, in association, order information for the first node, taking as reference the activity node, and the position of arrangement of the screen component.

Execution History Management Table Tg of a Flow Execution Device Fig. 18 illustrates an example of an execution history management table Tg which manages the execution history of operation manipulation components in Fig. 3. The execution history management table Tg is stored in the storage unit 606 of the workflow execution device 6 of Fig. 3.

The execution history management table Tg of Fig. 18 manages the execution history of operation manipulation components. In the execution history management table Tg, the component name (node name) column stores the names (node names) of operation manipulation components which are executed at the time of workflow execution. The execution history column stores the dates on which the operation manipulation components stored in the operation manipulation component column were executed. The parameter name column stores parameters corresponding to the operation component names stored in the operation manipulation component name column, and the data type column and data quantity column store the data types and data quantities corresponding to parameters in the parameter name column.

The content stored is explained based on Fig. 3. The workflow management unit 611 of Fig. 3 executes storage processing of the content for the execution history management table Tg of Fig. 18. For example, the workflow management unit 611 of Fig. 3 executes "acquire configuration item" (a component name (node name)) in a certain workflow. In this case, suppose that a text box for input of the host name of the CMDB from which to acquire the configuration element, a text box into which to input a search formula, and a combo box for output of the search results, are arranged on a form added to the activity of the workflow. At this time, the parameter corresponding to the text box into which the aforementioned host name is input is "Hostname", and the data type is "input". The parameter corresponding to the text box into which the search formula is input is "XPath", and the data type is "input". And the parameter corresponding to the combo box which outputs the search results is "Result_list".

In the above-described example, the workflow management unit 611 determines whether the data quantity of the host name and the data quantity of the search formula input by the user into the text boxes corresponding to the parameter name "Hostname" and the parameter name "XPath", respectively, are larger ("large") or smaller ("small") than a prescribed data quantity (for example, 10 kbytes), and stores the determination result in the data quantity column corresponding to the parameter names "Hostname" and "XPath". Here, the workflow management unit 611 determines that the data quantities corresponding to the parameter names "Hostname" and "XPath" are both smaller than the prescribed data quantity, and so stores the determination results ("small", "small") in the data quantity column. The workflow management unit 611 determines whether the data quantity of the search results displayed in the combo box corresponding to the parameter name "Result_list" (the quantity of data received from the CMDB) is larger than ("large") or smaller than ("small") the prescribed data quantity, and stores the determination result in the data quantity column corresponding to the parameter name "Result_list". Here, the workflow management unit 611 determines that the data quantity of the search formula is larger than the prescribed data quantity, and stores the determination result ("large") in the above-described data quantity column. And, the workflow management unit 611 stores the date on which the "acquire configuration item" component was executed in the execution history column. Here, "2011/12/09" is stored.

As explained above, the workflow management unit 611 of Fig. 3 stores data relating to execution of the operation manipulation components of a workflow in the execution history management table Tg of Fig. 18.

The workflow management unit 611 of Fig. 3 stores "2011/11/02" and "2011/11/10" in the execution history column corresponding to the component name "start up server". The workflow management unit 611 stores "Hostname" and "Result" in the parameter name column corresponding to the component name "start up server", stores "input" in the data type column and "small" in the data quantity column corresponding to the parameter name "Hostname", and stores "output" in the data type column and "small" in the data quantity column corresponding to the parameter name "Result".

In addition, the workflow management unit 611 stores "2011/11/28" in the execution history column corresponding to the component name "read file". Corresponding to the component name "read file", the workflow management unit 611 stores "Hostname", "Filename" and "Filedata" in the parameter name column, stores "input" in the data type column and "small" in the data quantity column corresponding to the parameter name "Hostname", stores "input" in the data type column and "large" in the data quantity column corresponding to the parameter name "Filename", and stores "output" in the data type column and "large" in the data quantity column corresponding to the parameter name "Filedata".

The execution history management table Tg is an example of eighth information, which stores, in association, a first node name (node name) and parameter names corresponding to the content of control processing in the first node and the parameter types, as well as the quantity of historical data actually input and output via the parameters of the first node when the first node is executed. In the above-described example, when the first node name "acquire configuration item" has been executed, the execution history management table Tg stores, in association, the first node parameter names "Hostname", "XPath" and "Result_list", the types of these parameters "input", "input" and "output", and the quantities of historical data actually input and output via these parameters, "small", "small" and "large".

### Flow of Workflow Creation Processing

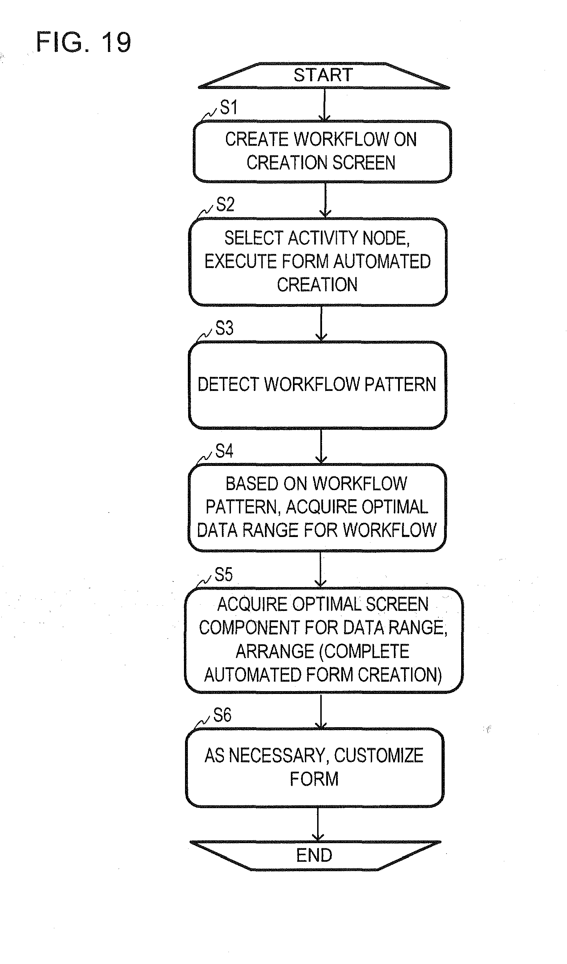

Fig. 19 is a flowchart explaining in summary workflow creation processing to be executed by the workflow creation device 5 of Fig. 8.

Step S1: The creator manipulates the manipulation device 81 of the workflow creation device 5, to instruct the display of the workflow creation screen on the workflow creation device 5. In response to this display instruction, the workflow creation engine 511 of the workflow creation device 5 displays the workflow creation screen on the display device 71. As explained in Fig. 4, the creator uses this creation screen to create a workflow.

Step S2: The creator manipulates the manipulation device 81 to select an activity of the workflow creation screen, as explained in Fig. 4, and instructs the workflow creation device 5 to execute form creation. The workflow creation device 5 executes the processing of steps S3 to S6 below in response to this execution instruction.

Step S3: The pattern detection engine 512 of the workflow creation device 5 detects the pattern of the workflow being created. This pattern detection processing is explained in detail in Fig. 21.

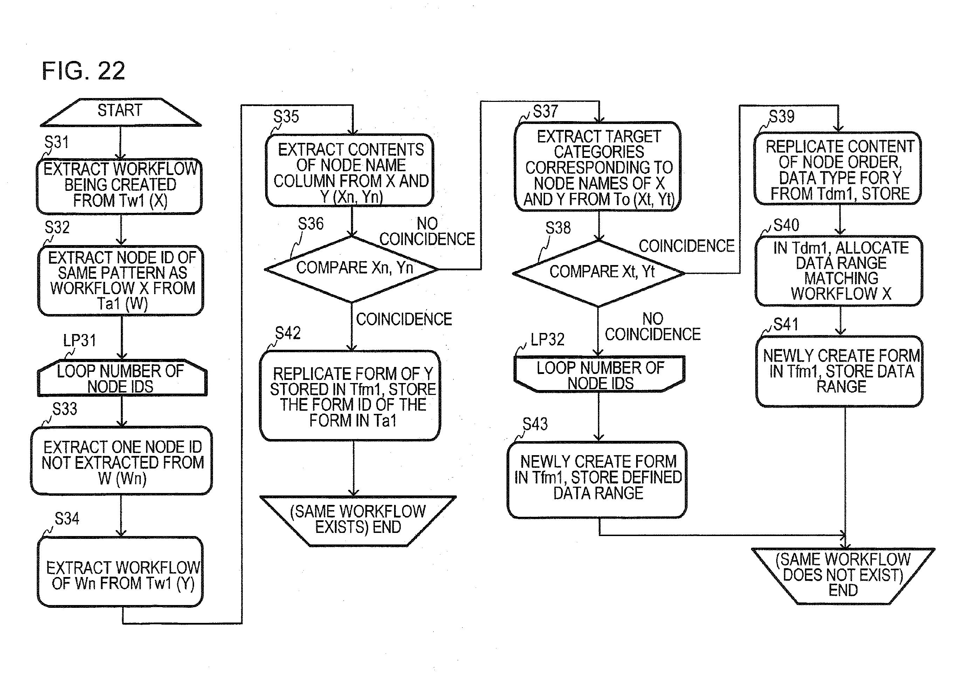

Step S4: The data range decision engine 513 of the workflow creation device 5 decides the optimal data ranges for the workflow being created based on the detected pattern. The data ranges indicate data arranged (displayed) on the form screen, and in actuality are, for example, the names of operation manipulation components existing before and after the activity, parameters corresponding to data input to operation manipulation components, and parameters corresponding to data output from operation manipulation components. This data range decision processing is explained in detail in Fig. 22.

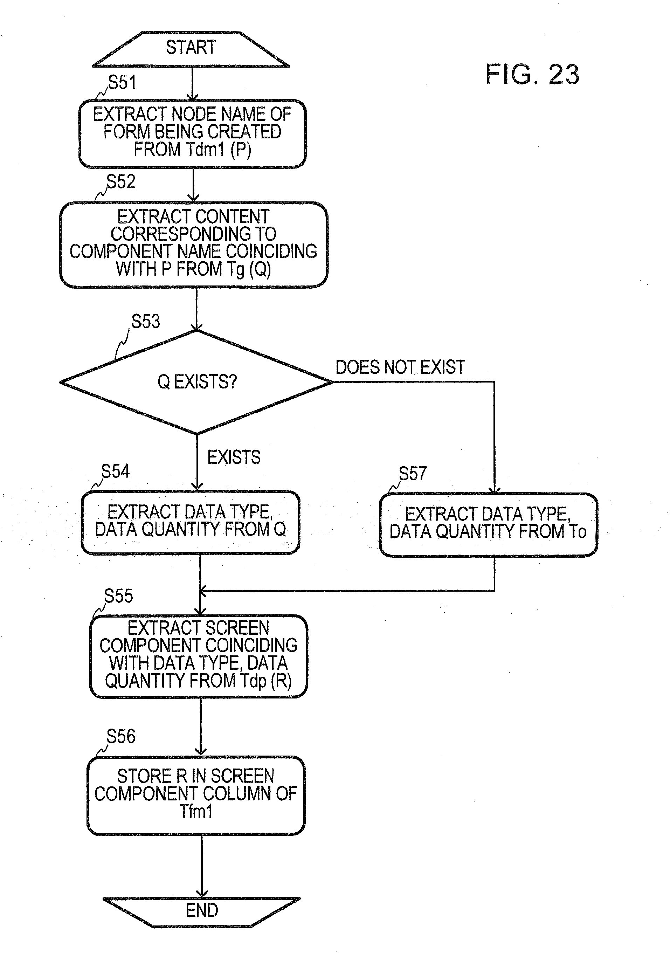

Step S5: The form creation engine 514 of the workflow creation device 5 acquires (selects) screen components according to the data ranges thus decided, and arranges the components on the form screen. The workflow creation engine 511 displays the created form screen on the display device 72 as explained in Fig. 5. Through these steps S3 to S5, automated creation of the form is completed. Screen component acquisition processing is explained in detail in Fig. 23.

Step S6: The creator manipulates the manipulation device 81, and performs customization as necessary of the content of the form displayed on the display device 72.

### Case in which a Previously Created Workflow Exists

The flow of automated form creation processing in a case where a previously created workflow exists is explained, based on Fig. 20 to Fig. 23.

Fig. 20 is a flowchart explaining in summary form automated creation processing in a case where a previously created workflow exists in Fig. 8. The flowchart of Fig. 20 corresponds to the processing content of steps S3 to S5 in Fig. 19.

Fig. 21 is a flowchart explaining in detail the processing of step S11 in Fig. 20.

Fig. 22 is a flowchart explaining in detail the processing of step S13 in Fig. 20.

Fig. 23 is a flowchart explaining in detail the processing of step S14 in Fig. 20.

First, automated form creation processing in a case where a previously created workflow exists is explained in summary, based on Fig. 20.

Step S11: The pattern detection engine 512 of Fig. 8 detects the pattern of the workflow being created.

Step S12: The workflow creation engine 511 and data range decision engine 513 search among previously created workflows for a workflow with the same pattern as the workflow pattern detected. Here, the workflow creation engine 511 and data range decision engine 513 execute a search of workflows within the workflow management table Tw1 of Fig. 9.

Step S13: The data range decision engine 513 of Fig. 8 decides on a data range based on a workflow with the same pattern as that detected. Here, in a case where a previously created workflow and the workflow being created are the same (the same workflow exists), processing proceeds to step S15. On the other hand, if the previously created workflow and the workflow being created are different (the same workflow does not exist), processing proceeds to step S14.

Step S14: The form creation engine 514 acquires screen components.

Step S15: The form creation engine 514 arranges the acquired screen components on a form screen. Through this processing, the automated form creation processing is completed. Processing proceeds to step S6 in Fig. 19.

Automated form creation processing in a case where a previously created workflow exists is explained in detail, based on Fig. 20 to Fig. 23. In the following explanation, the workflow creation device 5 has previously created a workflow which halts a specific server (hereafter called, as appropriate, a workflow for server halting). Hence the workflow management table Tw1 of Fig. 9 stores the content of the flow ID "001", and the activity management table Ta1 of Fig. 10 stores the content of the node ID "001-03", the data range management table Tdm1 of Fig. 11 stores the content of the form ID "001-A", and the form management table Tfm1 of Fig. 12 stores the content of the form ID "001-A". In this state, the creator creates the server startup workflow explained in Fig. 4.

Here, when creating a server startup workflow, the workflow creation engine 511 of Fig. 8 creates a new flow row in the workflow management table Tw1 of Fig. 9 in order to manage the workflow. In other words, the workflow creation engine 511 creates a row in the workflow management table Tw1 in order to store new data in the flow ID column, workflow name column, order column, node name column, node ID column, and node type column.

In the workflow management table Tw1 of Fig. 9, the workflow creation engine 511 of Fig. 8 stores a new flow identifier "002" in the flow ID column of the newly created flow row, and based on the content of the creation screen for this workflow, stores "start up specific server" in the workflow name column, and in the order number column, stores "1" to "5" indicating the order of nodes in the node name column. Further, the workflow creation engine 511 stores "Start", "acquire configuration item", "activity", "start up server", and "Exit" in the node name column, and in the node ID column, stores node IDs "002-01" to "002-05" identifying nodes in the node name column. Further, in the node type column, the workflow creation engine 511 stores "acquisition system component" corresponding to the node name "acquire configuration item", stores "activity" corresponding to the node name "activity", and stores "manipulation system component" corresponding to the node name "start up server".

Further, in the activity management table Ta1 of Fig. 10, the workflow creation engine 511 of Fig. 8 creates a new activity row to manage the activity. In order words, in the activity management table Ta1, the workflow creation engine 511 newly creates a row to store data in the node ID column, pattern column, and form ID column. And, the workflow creation engine 511 stores, in the node ID column of the newly created activity row, the node ID (002-03) of the node name "activity" for the flow ID "002" in the workflow management table Tw1 of Fig. 9.

The update processing of Fig. 9 explained above is executed in step S1 of Fig. 19.

### Workflow Pattern Detection

Workflow pattern detection processing is explained based on Fig. 21, and referring to Fig. 9, Fig. 10 and Fig. 13. Fig. 21 is a flowchart explaining workflow pattern detection. The workflow pattern detection processing explained in Fig. 21 corresponds to steps S11 and S12 of Fig. 20.

Step S21: The pattern detection engine 512 of Fig. 8 extracts the content of the workflow being created from the workflow management table Tw1 of Fig. 9, and expands the content in memory 502 (see Fig. 2). In the above-described example, the content of the workflow identified by the flow ID "002" is extracted and is expanded in memory 502. Let the content of this extracted workflow be workflow X. In the following explanation, the extracted content and information are always expanded in memory 502.

Step S22: The pattern detection engine 512 of Fig. 8 extracts the number of patterns j from the pattern management table Tp of Fig. 13. In the example of the pattern management table Tp, the number of patterns is four patterns, and thus the number of patterns j is 4 (j = 4).

Here, the processing of steps S23 and S24 between the loop start LP21 and the loop finish LP22 are repeated until a determination of "coincidence" occurs in step S24 (step S24/coincidence), or until processing has been repeated for the number of patterns, j times.

Step S23: The pattern detection engine 512 of Fig. 8 extracts a pattern which has not been extracted from the pattern management table Tp of Fig. 13. This extracted pattern is called pattern Y. In the case of the first execution of step S33, the content of the "target selection pattern" is extracted.

Step S24: The pattern detection engine 512 compares the content of the node type column for the workflow X and the content of the node type column for the pattern Y, and determines whether there is coincidence.

In the case of the above-described example, the content of the node type column of the workflow X is "acquisition system component", "activity" and "manipulation system component", and the content of the node type Y for the pattern Y is "acquisition system component", "activity" and "manipulation system component". Hence the pattern detection engine 512 determines that there is coincidence in step S24 (step S24/coincidence), and processing proceeds to step S25.

Step S25: The workflow creation engine 511 of Fig. 8 stores the pattern name of the pattern Y in the pattern column of the activity management table Ta1 of Fig. 10. In other words, the workflow creation engine 511 stores the pattern name for which the node types coincide. In the above-described example, the workflow creation engine 511 stores, in the pattern column of the activity management table Ta1 of Fig. 10, the pattern name "target selection pattern" corresponding to the same node ID as the node ID "002-03" (see Fig. 9) of the node name "activity" in the workflow X.

When the pattern detection engine 512 of Fig. 8 determines that there is "no coincidence" in step S24 (step S24/no coincidence), processing returns to step S23, and a pattern which has not been extracted from the pattern management table Tp of Fig. 13 is extracted. This processing is repeated in the pattern management table Tp until "patterns other than the above".

Here, when there is no coincidence despite the fact that the processing of steps S23 and S24 has been executed the number of times of the number of patterns j, processing proceeds to step S26. This case in which there is no coincidence is a case in which, for example, there is no activity in the workflow being created. In this case, the creator himself creates a form from the beginning (manual form creation). That is, processing proceeds to step S6 in Fig. 19.

### Decision of Data Range

Processing for data range decision is explained based on Fig. 22, and referring to Fig. 9 to Fig. 12 and Fig. 14. Fig. 22 is a flowchart explaining data range decision processing. The data range decision processing explained in Fig. 22 corresponds to step S13 in Fig. 20.

Step S31: The data range decision engine 513 of Fig. 8 extracts the content of the workflow being created from the workflow management table Tw1 of Fig. 9. In the above-described example, the data range decision engine 513 extracts the content of the workflow X identified by the flow ID "002". The content of this workflow X is data stored in the workflow name column, order column, node name column, node ID column, and node type column, corresponding to the flow ID "002".

Step S32: The data range decision engine 513 extracts the node ID of the same pattern as the workflow X from the activity management table Ta1 of Fig. 10. At this time, the same node ID as the node ID which identifies the activity node in the workflow X is not extracted. When there exist a plurality of node IDs in the same pattern as the workflow X, the plurality of node IDs is extracted. In the above-described example, the pattern of the workflow X is the "target selection pattern", and so the data range decision engine 513 extracts the node ID "001-03". The extracted node ID is stored as appropriate in the node ID(W). At this time, the data range decision engine 513 does not extract the same node ID as the node ID "002-3" which identifies the activity node in the workflow X.

Further, the data range decision engine 513 stores the number k of extracted node IDs in memory 502 (see Fig. 2). In the above-described case, k is 1.

Here, either a determination of coincidence is made in steps S36 or S38, or the processing of steps S33 to S38, between the loop start LP31 and the loop end LP32, is executed for the number of times equal to the number k of extracted node IDs.

Step S33: The data range decision engine 513 of Fig. 8 selects one node ID not selected from the node IDs(W), and extracts the node ID, which is selected. This selected and extracted node ID is called node ID(Wn). In the above-described example, the data range decision engine 513 extracts one node ID(Wn) "001-03".

Step S34: The data range decision engine 513 of Fig. 8 extracts the content of a workflow having the node ID(Wn) from the workflow management table Tw1 of Fig. 9. This extracted workflow is called the workflow Y. In the above-described example, the data range decision engine 513 extracts the content of the workflow having the node ID(Wn) "001-03" from the workflow management table Tw1 of Fig. 9, that is, the content of the workflow with the flow ID "001". The content of this workflow Y is the data stored in the workflow name column, order column, node name column, node ID column, and node type column corresponding to the flow ID "001".

Step S35: The data range decision engine 513 of Fig. 8 extracts the content of the node name column of the workflow X and the content of the node name column of the workflow Y. The content of the extracted node name column of workflow X is called the node content Xn, and the content of the node name column of the workflow Y is called the node content Yn.

In the above-described example, the node content Xn of the workflow X is the data "Start", "acquire configuration item", "activity", "start up server" and "Exit" stored in the node name column in the flow ID "002" of the workflow management table Tw1 of Fig. 9. And, the node content Yn of the workflow Y is the data "Start", "acquire configuration item", "activity", "halt server" and "Exit" stored in the node name column in the flow ID "001" of the workflow management table Tw1 of Fig. 9.

Step S36: The data range decision engine 513 of Fig. 8 determines whether the node content Xn and the node content Yn coincide. In the above-described example, because "start up server" which is one node of the node content Xn and "halt server" which is one node of the node content Yn are different, the data range decision engine 513 determines that there is no coincidence (step S36/no coincidence), and processing proceeds to step S37.

Step S37: The data range decision engine 513 of Fig. 8 extracts from the operation manipulation component management table To of Fig. 14 the target categories Xt corresponding to the node names of the node content Xn and the target categories Yt corresponding to the node names of the node content Yn.

In the above-described example, the node names of the node content Xn are "Start", "acquire configuration item", "activity", "start up server", and "Exit". And in the operation manipulation component management table To of Fig. 14, the target categories corresponding to these node names are "CMDB" for "acquire configuration item", and "server" for "start up server". Hence the data range decision engine 513 extracts as the target categories Xt "CMDB" and "server".

On the other hand, the node names of the node content Yn are "Start", "acquire configuration item", "activity", "halt server", and "Exit". In the operation manipulation component management table To of Fig. 14, the target categories corresponding to these node names are "CMDB" for "acquire configuration item", and "server" for "halt server". Hence the data range decision engine 513 extracts as the target categories Yt "CMDB" and "server".

Step S38: The data range decision engine 513 of Fig. 8 compares the target category Xt and the target category Yt, and determines whether there is coincidence. In the above-described example, the data range decision engine 513 determines that there is coincidence between the target category Xt and the target category Yt (step S38/coincidence), and processing proceeds to step S39.

A case in which there is coincidence means, in other words, that there is a previously created workflow which is similar to the workflow being created. A case in which there is no coincidence means, in other words, that there is no previously created workflow which is similar to the workflow being created.

Step S39: The data range decision engine 513 replicates the content of the node order and the content of the data types for the workflow Y from the data range management table Tdm1 of Fig. 11, and stores the data as data ranges corresponding to the form for the workflow being created.

In step S39, first the data range decision engine 513 of Fig. 8 creates a new form row in the data range management table Tdm1 of Fig. 11 in order to manage the data ranges of the form for the workflow being created. In order words, the data range decision engine 513 creates a new row in the data range management table Tdm1 to store data in the form ID column, node order column, node name column, parameter name column, data type column, and data ID column.

The data range decision engine 513 then allocates a new form ID in the data range management table Tdm1 of Fig. 11, and stores the form ID in the form ID column. The data range decision engine 513 then replicates the content of the node order and the content of the data types corresponding to the form ID having the flow ID of the workflow Y (form ID including the flow ID) in the newly created node order column and data type column. In the above-described example, the data range decision engine 513 allocates the new form ID "002-A" and stores the ID in the form ID column. The data range decision engine 513 then replicates the node orders "i-1 and "i+1" corresponding to the form ID "001-A" (see Fig. 11) having the flow ID "001" (see Fig. 9) of the workflow Y in the node order column corresponding to the form ID "002-A" (see Fig. 11). Further, the data range decision engine 513 replicates the data types "input", "output" and "input" corresponding to the form ID "001-A" having the flow ID "001" of the workflow Y in the data type column corresponding to the form ID "002-A".

Step S40: The data range decision engine 513 of Fig. 8 allocates data ranges matching the workflow X in the data range management table Tdm1 of Fig. 11. In the above-described example, in the workflow management table Tw1 of Fig. 9, the data range decision engine 513 extracts the node names "acquire configuration item" (node type "acquisition system component") and "start up server" (node type "manipulation system component") before and after the node name "activity" taken as a reference in the workflow X (flow ID "002") being created, and stores these in the node name column for the form ID "002-A" in the data range management table Tdm1 of Fig. 11.

The data range decision engine 513 then extracts the parameters corresponding to these extracted node names from the operation manipulation component management table To of Fig. 14. In the above-described example, the extracted node names are "acquire configuration item" and "start up server". Hence in the operation manipulation component management table To of Fig. 14, the parameters corresponding to the node name "acquire configuration item" are "Hostname", "XPath" and "Result_list". Further, in the operation manipulation component management table To, the parameters corresponding to the node name "start up server" are "Hostname" and "Result".

The data range decision engine 513 stores parameters extracted from the operation manipulation component management table To of Fig. 14, and parameters coinciding with the parameter names in the form (form ID "001-A") of the workflow Y in the data range management table Tdm1 of Fig. 11, in the parameter name column of the form ID "002-A" in the data range management table Tdm1 of Fig. 11. In the above-described example, the data range decision engine 513 stores the parameters "XPath", "Result_list" and "Hostname" in the parameter name column of the form ID "002-A". At this time, the data range decision engine 513 stores parameters corresponding to node names. In the example of Fig. 11, the data range decision engine 513 stores in sequence "XPath" and "Result_list" corresponding to the node name "acquire configuration item", and stores "Hostname" corresponding to the node name "start up server".

The parameter names of the workflow Y (form ID "001-A") in the data range management table Tdm1 of Fig. 11 may also be replicated as-is in the parameter name column of the form ID "002-A".

Then, in the data range management table Tdm1 of Fig. 11, the data range decision engine 513 allocates data IDs corresponding to the newly stored parameters, and stores the data IDs in the data ID column. In the above-described example, the data range decision engine 513 stores the data IDs "002A-001" to "002A-003" in the data ID column.

Step S41: The form creation engine 514 of Fig. 8 newly creates a form in the form management table Tfm1 of Fig. 12, and stores the data ranges allocated in step S40.

In step S41, first the form creation engine 514 creates a new form row in the form management table Tfm1 of Fig. 12 in order to manage the form of the workflow being created. In other words, the form creation engine 514 creates a new row in the form management table Tfm1 in order to store data in the form ID column, parameter column, screen component name column, data ID column, and position column.

Then, the form creation engine 514 stores the new form ID ("002-A") allocated in step S39 in the form ID column of the form management table Tfm1 of Fig. 12.

In the data range management table Tdm1 of Fig. 11, the form creation engine 514 reads out node names corresponding to the node order of the above-described newly allocated form ID ("002-A"), and the parameter names corresponding to the node names.

In the above-described example, in the data range management table Tdm1 of Fig. 11, the form creation engine 514 reads out the node name "acquire configuration item" and the parameter names "XPath" and "Result_list" corresponding to the node order "i-1", and reads out the node name "start up server" and the parameter name "Hostname" corresponding to the node order "i+1". Then, in the form management table Tfm1 of Fig. 12, the form creation engine 514 writes the read-out node names and parameter names, in the read-out order, to the node name column and parameter name column corresponding to the above-described newly allocated form ID ("002-A").

In the above-described example, in the parameter name column of the form management table Tfm1, the form creation engine 514 stores, in order, the node name "acquire configuration item" and the parameter names "XPath" and "Result_list", the node name "start up server", and the parameter name "Hostname".

Further, the form creation engine 514 replicates information in the position column in the form management table Tfm1, the position column which corresponds to the form ID ("001-A") which identifies the form of the workflow Y, and stores the information in the position column corresponding to the form ID ("002-A") identifying the form of the workflow X.

In the above-described example, the form creation engine 514 replicates the information "L1", "L1-1", "L1-2", "R1", "R1-1" in the position column of the form management table Tfm1 corresponding to the above-described form ID ("001-A"), and stores the information in the position column corresponding to the above-described form ID ("002-A").

Finally, the workflow creation engine 511 stores the above-described newly allocated form ID in the form ID column of the activity management table Ta1 of Fig. 10 corresponding to the node ID of the activity of the workflow being created.

In the above-described example, the above-described newly allocated form ID is "002-A". In the above-described example, in the activity management table Ta1 of Fig. 10, the node ID of the activity of the workflow being created is "002-03". Hence in the activity management table Ta1 of Fig. 10, the workflow creation engine 511 stores "002-A" in the form ID column of the node ID "002-03".

In step S36 of Fig. 22, when the data range decision engine 513 has determined that the node content Xn and the node content Yn coincide (step S36/coincidence), processing proceeds to step S42. This case of coincidence is a case in which the workflow being created is the same as a workflow created in the past. In the above-described example, in this case the workflow being created is a workflow to halt a server.

Step S42: The workflow creation engine 511 replicates the content of the form of the workflow Y stores in the form management table Tfm1 of Fig. 12, and stores the form ID which identifies the replicated form in the activity management table Ta1.

In step S42, in the form management table Tfm1 of Fig. 12, the workflow creation engine 511 replicates the same content as the content of the form of the workflow Y (form ID "001-A") below this form, and allocates a new form ID and data IDs. In this case the workflow creation engine 511 allocates the form ID "002-A". In the example of Fig. 12, a state is illustrated in which "start up server" in the parameter name column is replaced with "halt server" corresponding to the form ID "002-A".

Then, in the activity management table Ta1 of Fig. 10, the workflow creation engine 511 stores this newly allocated form ID in the form ID column corresponding to the node ID of the activity of the workflow X which is being created. In the above-described example, in the activity management table Ta1 of Fig. 10, the workflow creation engine 511 stores "002-A" in the form ID column of the node ID "002-03".

The workflow creation device 5 executes the processing of steps S33 to S41 explained above until coincidence is determined in steps S36 and S39, or until execution has been performed a number of times equal to the number of k of extracted node IDs.

In a case where, even after executing the processing of steps S33 to S41 a number of times equal to the number of k of extracted node IDs, incidence is not determined in steps S36 and S39, that is, there is no similar previously created workflow, processing proceeds to step S43.

In step S43, in order to manage the form of the workflow being created, a new form row is created in the form management table Tfm1 of Fig. 12, and a defined data range is allocated. Details of this processing are explained in Fig. 30.

### Processing to Acquire Screen Components for Arrangement on Form Screen

Processing to select screen components to arrange on the form screen is explained based on Fig. 23, and referring to Fig. 11, Fig. 12, Fig. 14, Fig. 15 and Fig. 18.

Fig. 23 is a flowchart explaining processing to select screen components to arrange on the form screen. The processing to acquire screen components explained in Fig. 23 corresponds to step S14 in Fig. 20.

Step S51: the form creation engine 514 of Fig. 8 extracts node names of the form of the workflow being created (hereafter called, as appropriate, the form being created), from the data range management table Tdm1 of Fig. 11. The extracted node names are called node names P. In the above-described example, the form creation engine 514 extracts, from the data range management table Tdm1, the node names P "acquire configuration item" and "start up server" of the form being created (form ID "002-A").

Step S52: The form creation engine 514 of Fig. 8 extracts content corresponding to component names (node names) which coincide with node names P from the execution history management table Tg of Fig. 18. In the execution history management table Tg, this content is data stored in the parameter name column, data type column and data quantity column corresponding to the above-described coinciding component names (node names).

The form creation engine 514 of Fig. 8 acquires in advance the execution history management table Tg from the workflow execution device 6, and for example stores the table temporarily in memory 502 (see Fig. 2). Specifically, the form creation engine 514 issues a request to the workflow execution device 6 to transmit the execution history management table Tg. In response to this transmission request, the workflow management unit 611 of the workflow execution device 6 transmits the execution history management table Tg to the workflow creation device 5. The form creation engine 514 temporarily stores the execution history management table Tg in memory 502.

Here, the above-described extracted content is called the content Q. In the above-described example, the form creation engine 514 extracts from the execution history management table Tg of Fig. 18, as the content Q, the content "acquire configuration item" and "start up server".

Step S53: The form creation engine 514 of Fig. 8 determines whether there exists content Q. When there is content Q (step S53/exists), processing proceeds to step S54.

Step S54: The form creation engine 514 of Fig. 8 extracts the data type and data quantity for each component name from the content Q.

At this time, in the data range management table Tdm1 of Fig. 11, the form creation engine 514 extracts from the content Q the node names, parameter names corresponding to the node names, and data types and data quantities corresponding to the same node names and parameter names, in the form being created (form ID "002-A").

In the above-described example, in the form management table Tfm1 of Fig. 12, the node name in the form being created (form ID "002-A") and the parameter names corresponding to this node name are respectively "acquire configuration item", and "XPath" and "Result_list". Hence the form creation engine 514 extracts from the content Q the data type "input" and the data quantity "small" corresponding to the component name (node name) "acquire configuration item" and parameter name "XPath", and extracts the data type "output" and the data quantity "large" corresponding to the parameter name "Result_list" (see the operation manipulation component management table To of Fig. 18). Further, in the form management table Tfm1 of Fig. 12, the node name and the parameter name corresponding to the node name in the form being created (form ID "002-A") are respectively "start up server" and "Hostname". Hence the form creation engine 514 extracts from the content Q the data type "input" and the data quantity "small" corresponding to the component name (node name) "start up server" and the parameter name "Hostname".

In the operation manipulation component management table To of Fig. 18, when there are a plurality of the same component name (for example, "start up server"), one with a newer execution history is extracted as the content Q.

Step S55: The form creation engine 514 extracts, from the screen component definition table Tdp of Fig. 15, a screen component coinciding with the extracted data type and data quantity. The extracted screen component is taken to be the screen component R. In the above-described example, the form creation engine 514 searches for and extracts the screen component "text" coinciding with the data type "input" and data quantity "small" corresponding to the parameter name "XPath". The search is performed in order from the top of the table. The form creation engine 514 searches for and extracts the screen component "combo box" coinciding with the data type "output" and data quantity "large" corresponding to the parameter name "Result_list", and searches for and extracts the screen component "text" coinciding with the data type "input" and data quantity "small" corresponding to the parameter name "Hostname".

Step S56: The form creation engine 514 stores the screen component R in the form management table Tfm1 of Fig. 12. At this time, the form creation engine 514 stores the screen component R corresponding to the parameter in the screen component column of the form management table Tfm1 corresponding to the parameter in the form being created (form ID "002-A").

In the above-described example, the screen component corresponding to the parameter name "XPath" was "text", the screen component corresponding to the parameter name "Result_list" was "combo box", and the screen component corresponding to the parameter name "Hostname" was "text". Hence the form creation engine 514 stores, in the form being created (form ID "002-A") in the form management table Tfm1, "text" in the screen component name column corresponding to the parameter "XPath", "combo box" in the screen component name column corresponding to the parameter "Result_list", and "text" in the screen component name column corresponding to the parameter "Hostname".

Then, the form creation engine 514 references the data range management table Tdm1 of Fig. 11, reads out the data IDs ("002A-001" to "002A-003") to which parameter names are allocated in the form being created (form ID "002-A"), and stores the data IDs in the data ID column of the form management table Tfm1 of Fig. 12 corresponding to the parameter names in the form being created (form ID "002-A").

In the above-described example, the form creation engine 514 stores the data ID "002A-001" for the screen component "text" corresponding to the parameter "XPath", the data ID "002A-002" for the screen component "combo box" corresponding to the parameter "Result_list", and the data ID "002A-003" for the screen component "text" corresponding to the parameter "Hostname".

Then, the form creation engine 514 stores the screen component name "label" as the screen component in the screen component name column corresponding to parameters other than those described above. After this storage processing, the workflow creation engine 511 replicates the position information stored in the position column for the form ID "001-A", and stores the information in the position column for the form ID "002-A".

In step S53, when there is no content Q (step S53/none), processing proceeds to step S57.

Step S57: The form creation engine 514 of Fig. 8 extracts from the operation manipulation component management table To of Fig. 14, for each node name P (component name) in the workflow being created, the parameter data type and data quantity. In other words, the form creation engine 514 of Fig. 8 extracts, from the operation manipulation component management table To of Fig. 14, content corresponding to the node names (component names) coinciding with node names P. In the operation manipulation component management table To, this content is the data stored in the parameter name column, data type column, and data column corresponding to the above-described coinciding component names (node names). Here, the extracted content is called the content Q'. In the above-described example, the form creation engine 514 extracts from the operation manipulation component management table To the content of "acquire configuration item" and "start up server" as the content Q'.

Then, the form creation engine 514 of Fig. 8 extracts, for each component name in the content Q', data types and data quantities. At this time in the data range management table Tdm1 of Fig. 11, the form creation engine 514 extracts from the content Q' the node names, parameter names corresponding to the node names, and data types and data quantities corresponding to the same node names and parameter names, in the form being created (form ID "002-A"). The above-described data type and data quantity extraction was explained in detail in step S57, and so is omitted.

Processing then proceeds to step S55. The processing of step S55 and later was described above, and so is omitted.

In the above, through the explanations of Fig. 20 to Fig. 23, the explanation up to step S14 in Fig. 20 (the flow of automated form creation processing when a previously created workflow exists) is concluded.

Then, processing proceeds to step S15 in Fig. 20.

In step S15, as explained in Fig. 5, the workflow creation engine 511 of Fig. 8 displays the form creation screen, and based on the form template Tft of Fig. 16, arranges screen components corresponding to each of the parameters at positions corresponding to each of the parameter names for the form ID of the workflow being created, stored in the form management table Tfm1 of Fig. 12.

In the example of Fig. 5 and Fig. 12, the form ID of the workflow being created is "002-A". In the above-described example, the workflow creation engine 511 of Fig. 8 displays, the parameter name "acquire configuration item", as the screen component name "label"(that is, character string) ,the parameter name which corresponds to the position information "L1" in the position column for the form ID "002-A", at the position on the form creation screen corresponding to the position information "L1" (see the symbol P11 in Fig. 5). Further, the workflow creation engine 511 displays, the parameter name "XPath", as the screen component name "text" (text box), the parameter name which corresponds to the position information "L1-1" in the position column of the form ID "002-A", at the position on the form creation screen corresponding to the position information "L1-1" (see the symbol P13 in Fig. 5). At this time, the workflow creation engine 511 displays the parameter name "XPATH" on the left side of the text box (see the symbol P12 in Fig. 5). The user can identify the type of parameter displayed in the text box through this display.

The workflow creation engine 511 displays, the parameter name "Result_list" as the screen component name "combo box", the parameter name which corresponds to the position information "L1-2" in the position column of the form ID "002-A" at the position on the form creation screen corresponding to the position information "L1-2" (see the symbol P15 in Fig. 5). At this time, the workflow creation engine 511 displays the parameter name "Result_list" on the left side of the combo box (see the symbol P14 in Fig. 5). The user can identify the type of parameter displayed in the combo box through this display.

The workflow creation engine 511 displays, the parameter name "start up server", as the screen component name "label", the parameter name which corresponds to the position information "R1" in the position column of the form ID "002-A" at the position on the form creation screen corresponding to the position information "R1" (see the symbol P16 in Fig. 5). Further, the workflow creation engine 511 displays, the parameter name "Hostname", as the screen component name "text" (text box), the parameter name which corresponds to the position information "R1-1" in the position column of the form ID "002-A", at the position on the form creation screen corresponding to the position information "R1-1" (see the symbol P18 in Fig. 5). At this time, the workflow creation engine 511 displays the parameter name "Hostname" on the left side of the text box (see the symbol P17 in Fig. 5). The user can identify the type of parameter input to the text box through this display.

The form screen creation processing of this embodiment, in which the automated form creation processing explained above is executed, is summarized below.

In this form screen creation processing, the data range decision engine 513 and form creation engine 514 decide screen components to be arranged on the form screen of the new workflow and arrange the screen components thus decided on the form screen of the new workflow based on the detected pattern of the new workflow and on the content of the first node control processing in the new workflow (see step S5 in Fig. 19). Further, the data range decision engine 513 and form creation engine 514 decide the arrangement positions of screen positions thus decided in the form screen, and arrange the screen components thus decided at the arrangement positions thus decided, based on the detected pattern of the new workflow and on the content of the first node control processing in the new workflow. This first node is a node of an operation manipulation component, as explained in Fig. 8.

Here, the new workflow is taken to be a workflow for server startup. In this case, the pattern of the new workflow is the "target selection pattern", and taking the activity as reference, an acquisition system component is arranged before, and a manipulation system component is arranged after (see the pattern management template Tp of Fig. 13).

In this case, as indicated by the content of the flow ID "002" in the workflow management table Tw1 of Fig. 9, the node before the activity in the new workflow (hereafter called the acquisition node) has the node name "acquire configuration item". And, the content of the control processing of this acquisition node is to output to the CMDB 2 of Fig. 1 an input search formula, and to acquire and output for display the search results, as explained in Fig. 6. The node after the activity in the new workflow (hereafter called the manipulation node) has the node name "start up server", and the content of the control processing of this manipulation node is to start up the server device with the input host name, as explained in Fig. 6.

The data range decision engine 513 acquires parameters ("XPath", "Result_list") corresponding to the acquisition system components, in order to arrange screen components corresponding to the acquisition system components on the form screen (see step S40 of Fig. 22). Then, the form creation engine 514 decides the screen components corresponding to the acquired parameters, that is, the screen components ("text", "combo box") corresponding to the acquisition system components (see step S55 in Fig. 23). Screen components are similarly decided for the manipulation system components. The form creation engine 514 the arranges the screen components thus decided on the form screen in sequence. For example, the form creation engine 514 arranges these screen components so as not to overlap from the upper left in the screen toward the upper right in the screen.

Further, in order to improve convenience to the user, arrangement positions for screen components are decided as follows. Here, from the pattern management table Tp of Fig. 13, the operation manipulation component management table To of Fig. 14 and the screen component definition table Tdp of Fig. 15, it is seen that screen components correspond to node types for each pattern. For example, in the case of the target selection pattern, taking the activity as reference the acquisition system component is connected (arranged) before, and the manipulation system component is connected after. This manipulation system component corresponds to at least an input system screen component such as a text box (text) for input of a manipulation target, and the acquisition system component corresponds to at least an input/output system screen component such as a combo box or similar to output acquired information.

Further, from the pattern management table Tp of Fig. 13, the form template Tft of Fig. 16 and the data range template Tdt of Fig. 17, it is seen that the screen component arrangement positions of the acquisition system component and the manipulation system component correspond to node types for each of the patterns. For example, in the case of the target selection pattern, taking the activity as reference, the acquisition system component is connected before, and the manipulation system component is connected after. Then, from the form template Tft of Fig. 16 and the data range template Tdt of Fig. 17, the screen component which is the acquisition system component is arranged on the left side of the form screen, and the screen component which is the manipulation system component is arranged on the right side of the form screen. Hence the form creation engine 514 arranges the screen component which is the acquisition system component, decided as described above, on the left side of the form screen, and arranges the screen component which is the manipulation system component, decided as described above, on the right side of the form screen.

In order to perform the above-described screen composition decision and arrangement processing with higher precision, the form screen creation processing of this embodiment is executed through the following processing.

The data range decision engine 513 determines whether the new workflow and a previously created workflow are the same based on the workflow management table Tw1 of Fig. 9 (see step S36 of Fig. 22).

When the data range decision engine 513 determines that the new workflow and a previously created workflow are the same (step S36/coincidence in Fig. 22), the form creation engine 514 executes the following processing. For example, based on the form management table Tfm1 of Fig. 12, the form creation engine 514 arranges a same screen component as a screen component arranged on the form screen of the previously created workflow which has been determined to be the same, on the form screen of the new workflow, at the same position as a position of screen component arranged on the form screen of the previously created workflow which has been determined to be the same (see step S42 of Fig. 22 and each of the steps of Fig. 23). In the above-described example, the form creation engine 514 arranges the screen component name of the form (form ID "002-A") of the new workflow in the form management table Tfm1 of Fig. 12 to the position on the form screen corresponding to the position information for the screen component (see step S15 of Fig. 20). In this case, as explained in step S42 of Fig. 22, in the example of Fig. 12 a state is illustrated in which "start up server" is replaced with "halt server" in the parameter name column corresponding to the form ID "002-A".

On the other hand, when the previously created workflow and the new workflow are not the same (step S36/no coincidence in Fig. 22), the data range decision engine 513 determines, based on the operation manipulation component management table To of Fig. 14, whether the category of the first node of the previously created workflow and the category of the first node of the new workflow are the same (step S38 in Fig. 22). When it is determined that the categories are the same (step S38/coincidence), the data range decision engine 513 and form creation engine 514 decide the name of a screen component which matches the parameter type and data quantity corresponding to the parameter name of the first node of the new workflow, based on the operation manipulation component management table To of Fig. 14 and the screen component definition table Tdp of Fig. 15.

Specifically, based on the operation manipulation component management table To of Fig. 14, the data range decision engine 513 decides the name of the parameter of the above-described first node (see steps S39 and S40 of Fig. 22). Then, based on the operation manipulation component management table To of Fig. 14 and the screen component definition table Tdp of Fig. 15, the form creation engine 514 decides the screen component corresponding to the name of this parameter (see the flowchart of Fig. 23).

At the time of decision of this screen component, the form creation engine 514 determines whether there is a name for the first node of the new workflow in the execution history management table Tg of Fig. 18 (see step S53 of Fig. 23). When it is judged that the name exists in the execution history management table Tg of Fig. 18 (step S53/exists in Fig. 23), based on the screen component definition table Tdp of Fig. 15 and the execution history management table Tg of Fig. 18, the screen component corresponding to the name of this parameter is decided (see step S54 of Fig. 23).

Then, based on the arrangement positions of screen components arranged on the form screen of the previously created workflow determined to be in the above-described same category and stored in the form management table Tfm1 of Fig. 12, the form creation engine 514 decides the position for arrangement on the form screen of the new workflow of screen component the name of which has been decided as described above (see step S56 of Fig. 23). In the above-described example, the position information for the screen component name in the form (form ID "002-A") of the new workflow in the form management table Tfm1 of Fig. 12 is the position information of the screen component the name of which has been decided. The position information of screen component names for the form (form ID "002-A") of the new workflow is the arrangement position information for screen components arranged on the screen of the form (form ID "001-A") of the previously created workflow determined to be in the above-described same category. In other words, the position information of screen component names for the form (form ID "002-A") of the new workflow is the position information of screen components stored corresponding to the form (form ID "001-A") of the previously created workflow determined to be in the above-mentioned same category. The previously created workflow determined to be in the above-described same category is a workflow similar to the new workflow.

Finally, the form creation engine 514 arranges the screen component with the decided name in the decided arrangement position. In the above-described example, the form creation engine 514 arranges the screen component name of the form (form ID "002-A") of the new workflow in the form management table Tfm1 of Fig. 12 in the position of the form screen corresponding to the position information for the screen component (see step S15 of Fig. 20).

As explained in the flowchart of Fig. 22, among the content of the previously created workflows recorded in the workflow management table Tw1 of Fig. 9, the content of the workflow with the same pattern as the workflow being created is extracted (see steps S32 to S34). Hence the number of extracted workflows can be reduced, so that the processing load in the workflow creation device 5 at the time of form creation and the memory region in which extracted workflows are temporarily stored can be reduced.

Further, the workflow management table Tw1 of Fig. 9 stores the node names of previously created workflows. Hence simply by comparing the node names of a previously existing workflow and the node names of the workflow being created (see step S36 in Fig. 22), whether the previously created workflow and the workflow being created coincide can easily be determined. As a result, the processing load during form creation in the workflow creation device 5 can be reduced.

Further, the form management table Tfm1 of Fig. 12 stores the names and positions of screen components arranged on the form screens of previously created workflows. Hence when the workflow being created is the same as a previously created workflow (step S36/coincidence in Fig. 22), the names and arrangement positions of screen components arranged on the form screen of the previously created workflow can be diverted (see step S42 in Fig. 22 and the flowchart of Fig. 23). In this way, the form of a previously created workflow is used, so that a form which is easily understood can be presented to the user.

Further, the operation manipulation component management table To of Fig. 14 stores categories corresponding to the names (node names) of operation manipulation components. Hence even if the previously created workflow and the workflow being created do not coincide, merely by comparing the categories of the node names of the previously created workflow and the categories of the node names of the workflow being created (see step S38 in Fig. 22), it can easily be determined whether the previously created workflow and the workflow being created are similar. And, when the two are similar, the names and arrangement positions of screen components arranged on the form screen of the similar previously created workflow can be diverted (see steps S39 to S41 of Fig. 22 and the flowchart of Fig. 23). In this way, by using a previously created form, a form which is easily understood can be presented to the user.

In addition, the operation manipulation component management table To of Fig. 14 and the execution history management table Tg of Fig. 18 store data types and data quantities corresponding to parameters, and the screen component definition table Tdp of Fig. 15 stores screen components corresponding to these data types and data quantities. Hence optimal screen components can be selected according to the data type and data quantity (see step S55 of Fig. 23), and so screen components suited to the content of a workflow can be displayed on a form screen.

In particular, as explained in step S54 of Fig. 23, by extracting data quantities of parameters from the execution history management table Tg of Fig. 18, the optimal screen components can be decided. For example, when the data quantity of the parameter name "Result_list" is small, in step S55 a table is selected as the screen component name. In this way, by storing data quantities which are actually input via parameters, the optimal screen components can be decided corresponding to the data quantities actually input or output.

Through the form screen creation processing explained above, based on the content of the form of a previously created workflow, a form which is optimal for a workflow can be automatically created. Hence not only are the creation tasks of the creator of a workflow made easy, but the burden of workflow creation tasks is alleviated, and the frequency of occurrence of errors accompanying creation tasks is reduced. As a result, the quality of workflow creation tasks is enhanced. Further, the optimal form for a workflow can be created, and thus the content of the workflow can be easily understood from the form, the burden of management tasks on a user performing operation management tasks using the workflow is alleviated, and the frequency of errors occurring in operation management tasks is reduced. As a result, the quality of operation management tasks is enhanced.

### First Creation of a Workflow

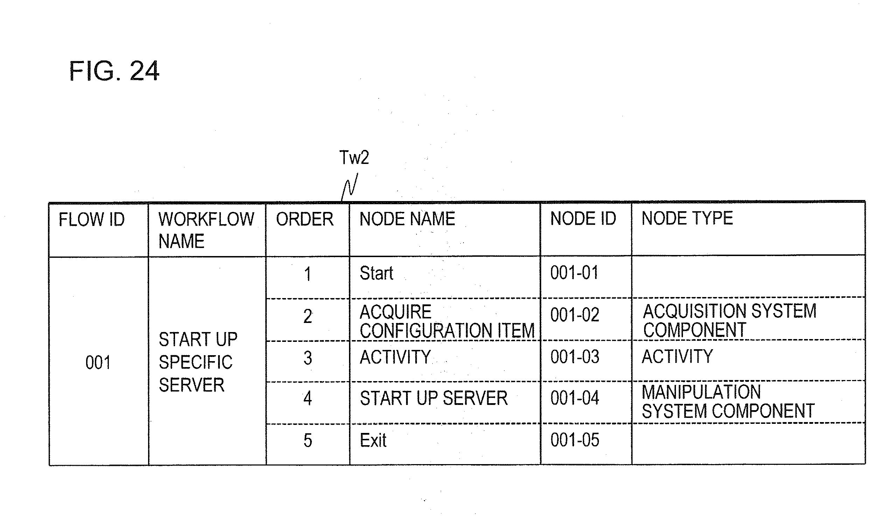

Automated form creation processing is explained for a case in which a previously created workflow does not exist, that is, for the case of first-time creation of a workflow, based on Fig. 24 to Fig. 30 and referring to Fig. 14, Fig. 16 and Fig. 17.

Fig. 24 illustrates an example of a workflow management table Tw2 explained in Fig. 30. The workflow management table Tw2 is stored, as the workflow management table Tw of Fig. 2 and Fig. 8, in the storage unit 506 of Fig. 2.

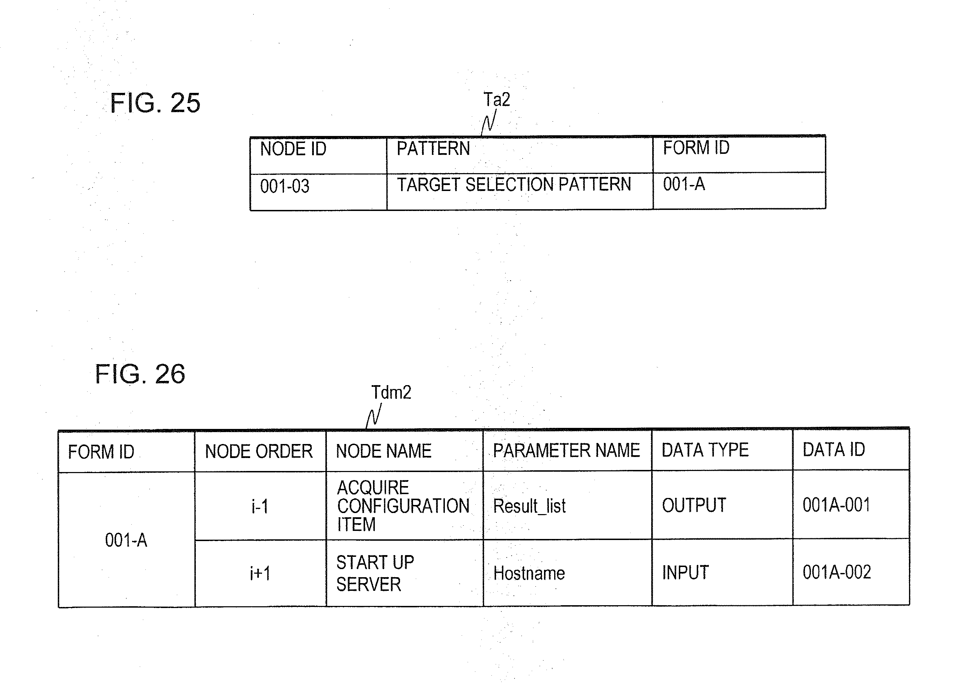

Fig. 25 illustrates an example of an activity management table Ta2 explained in Fig. 30. The activity management table Ta2 is stored, as the activity management table Ta of Fig. 2 and Fig. 8, in the storage unit 506 of Fig. 2.

Fig. 26 illustrates an example of a data range management table Tdm2 explained in Fig. 30. The data range management table Tdm2 is stored, as the data range management table Tdm of Fig. 2 and Fig. 8, in the storage unit 506 of Fig. 2.

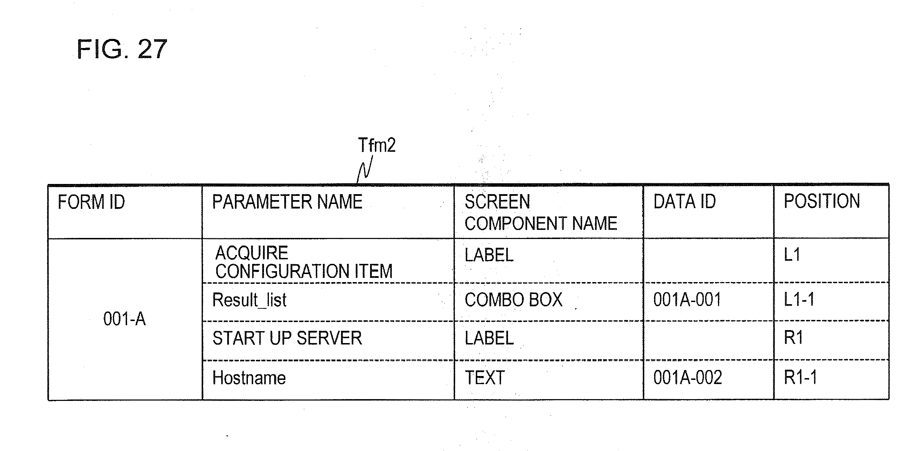

Fig. 27 illustrates an example of a form management table Tfm2 explained in Fig. 30. The form management table Tfm2 is stored, as the form management table Tfm of Fig. 2 and Fig. 8, in the storage unit 506 of Fig. 2.

In Fig. 24 to Fig. 27, the uppermost row is similar to the respective rows in the workflow management table Tw1 of Fig. 9, the activity management table Ta1 of Fig. 10, the data range management table Tdm1 of Fig. 11, and the form management table Tfm2 of Fig. 12. Processing to store the content of these columns is explained in Fig. 30.

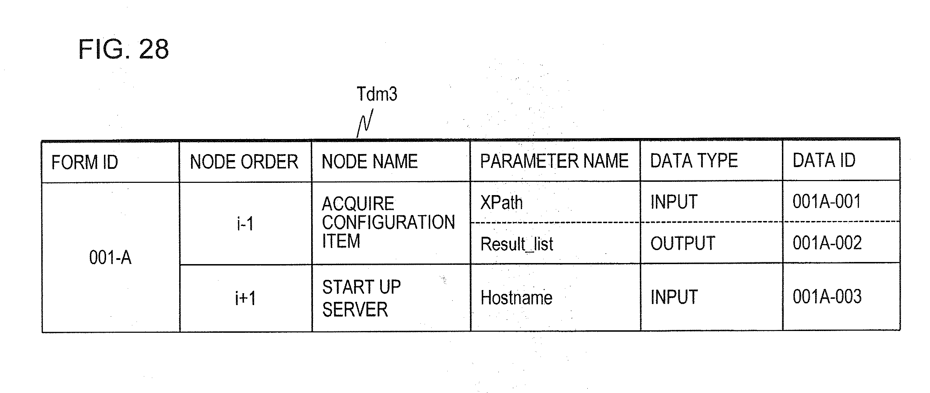

Fig. 28 illustrates a state in which the data range management table Tdm2 of Fig. 26 is updated by customizing a form.

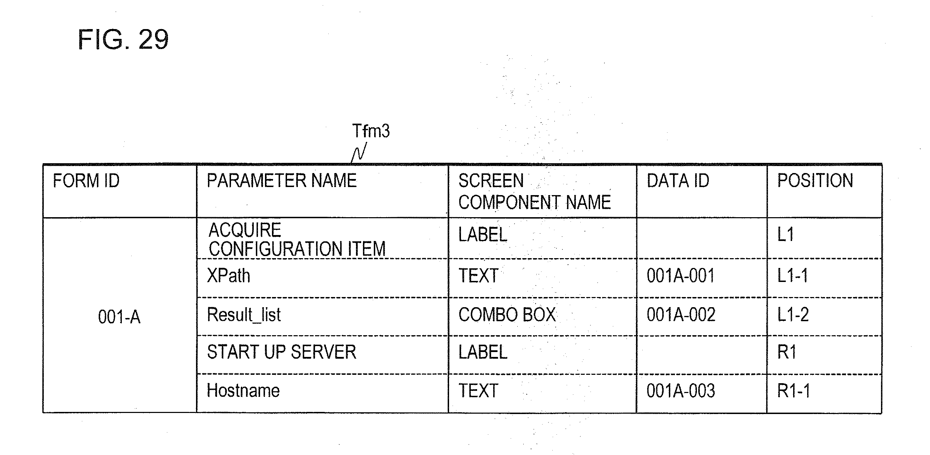

Fig. 29 illustrates a state in which the form management table Tfm2 of Fig. 27 is updated by customizing a form.

In the following explanation, a case is supposed in which a server startup workflow is created, as explained in Fig. 4. Through the creation of this server startup workflow, the workflow creation engine 511 of Fig. 8 creates the workflow management table Tw2 of Fig. 24, as explained in Fig. 9.

Then, the workflow creation engine 511 of Fig. 8 determines whether the new workflow is to be created for the first time, and when it is determined that the new workflow is to be created for the first time, the processing explained in each of the steps in the flowchart of Fig. 30 is executed. When for example no data is stored in the columns of the workflow management table Tw (in the storage unit 506 of Fig. 2), the workflow creation engine 511 of Fig. 8 determines that a new workflow is to be created for the first time. In addition, when no data is stored in the parameter name column of the activity management table Ta (in the storage unit 506 of Fig. 2), the workflow creation engine 511 of Fig. 8 determines that a new workflow is to be created for the first time.

Fig. 30 is a flowchart explaining form automated creation processing when a workflow is first created in Fig. 8. The processing of steps S61 to S65 in Fig. 30 corresponds to the processing of steps S3 to S5 in Fig. 19.

Step S61: As explained in Fig. 21, the pattern detection engine 512 of Fig. 8 detects the pattern of the workflow being created from the workflow management table Tw2 of Fig. 24. At this time, the workflow creation engine 511 of Fig. 8 stores the node ID "001-03" of the activity in the node ID column, as illustrated in the activity management table Ta2 of Fig. 25, and stores the detected pattern in the pattern column.

Step S62: The data range decision engine 513 of Fig. 8 decides the data ranges defined in the table.

The data range decision engine 513 of Fig. 8 stores the "identifier 001-A", which identifies the form added to the activity of the workflow being created, in the form ID column of the data range management table Tdm2 of Fig. 26. Further, taking as reference the node name "activity" corresponding to the flow ID column value "001" (workflow being created) in the workflow management table Tw2 of Fig. 24, the data range decision engine 513 extracts node names before and after, and stores the node names in the node name column of the data range management table Tdm2 of Fig. 26. In the above-described example, taking as reference the activity of the node ID "001-03" in the workflow management table Tw2 of Fig. 24, the data range decision engine 513 extracts "acquire configuration item" of node ID "001-02" and "start up server" of node ID "001-04", and stores these in the node name column of the data range management table Tdm2 of Fig. 26. At the same time, the data range decision engine 513 stores the order of the node names, taking as reference the activity in the node order column in Fig. 26. In the above-described example, the data range decision engine 513 stores the node order "i-1" in the node order column as the node order of the node name "acquire configuration item", and stores the node order "i+1" in the node order column as the node order of the node name "start up server".

Next, processing for storing data in the parameter name column and data type column of the data range management table Tdm2 of Fig. 26 is explained.

Taking as reference the activity (i) in the data range template Tdt of Fig. 17, the data range decision engine 513 of Fig. 8 extracts the data types before and after, and stores the data types in the data type column of the data range management table Tdm2 of Fig. 26. In the above-described example, taking as reference the activity (i) of the data range template Tdt of Fig. 17, the data range decision engine 513 extracts the data type "output" corresponding to the node order "i-1" and the data type "input" corresponding to the node order "i+1" before and after, and stores the data types, corresponding to the above-described node orders, in the data type column of the data range management table Tdm2 of Fig. 26.

In this data storing, the data range decision engine 513 stores the data type "output" corresponding to the node order "i-1" and stores the data type "input" corresponding to the node order "i+1" in the data type column of the data range management table Tdm2.

The data range decision engine 513 of Fig. 8 extracts from the operation manipulation component management table To of Fig. 14 the parameter names coinciding with the node names in the node name column and the data types in the data type column corresponding to the node names in the data range management table Tdm2 of Fig. 26. The data range decision engine 513 then stores the extracted parameter names in the parameter name column of the data range management table Tdm2, corresponding to the node names.

In the above-described example, for the node name "acquire configuration item" and the data type "output" corresponding to this node name in the data range management table Tdm2 of Fig. 26, there is the parameter name "Result_list" in the operation manipulation component management table To of Fig. 14. Hence the data range decision engine 513 of Fig. 8 extracts the parameter name "Result_list", and stores this in the parameter name column of the data range management table Tdm2, corresponding to the node name "acquire configuration item". Further, for the node name "start up server" and the data type "input" corresponding to this node name in the data range management table Tdm2 of Fig. 26, there is the parameter name "Hostname" in the operation "manipulation component management table To of Fig. 14. Hence the data range decision engine 513 extracts the parameter name "Hostname", and stores this in the parameter name column of the data range management table Tdm2, corresponding to the node name "start up server".

Further, the data range decision engine 513 of Fig. 8 allocates data IDs corresponding to the above-described stored parameter names, and stores the data IDs, corresponding to the parameter names, in the data ID column of the data range management table Tdm2. In the above-described example, the data IDs "001A-01" and "001A-02" are allocated corresponding to the parameter names "Result_list" and "Hostname", and are stored, corresponding to these parameter names, in the data ID column of the data range management table Tdm2.

Step S63: The form creation engine 514 of Fig. 8 acquires data types and data quantities in the data ranges.

The form creation engine 514 of Fig. 8 acquires, from the operation manipulation component management table To of Fig. 14, the data types and data quantities corresponding to the parameter names acquired by the data range decision engine 513, as explained in step S62. In the case of the above-described example, the form creation engine 514 acquires the data type "output" and data quantity "large" corresponding to the parameter name "Result_list" of the node name "acquire configuration item", and the data type "input" and data quantity "small" corresponding to the parameter name "Hostname" of the node name "start up server".

Step S64: The form creation engine 514 of Fig. 8 acquires screen components corresponding to the acquired data types and data quantities.

The form creation engine 514 of Fig. 8 searches and acquires from the screen component definition table Tdp of Fig. 15 screen component names corresponding to the data types and data quantities which correspond to parameter names acquired from the operation manipulation component management table To of Fig. 14. The search is performed in order from the beginning of the table.

In the case of the above-described example, the form creation engine 514 searches and acquires the screen component "combo box" corresponding to the data type "output" and data quantity "large" which correspond to the parameter name "Result_list" of the node name "acquire configuration item". And, the form creation engine 514 searches and acquires the screen component "text" corresponding to the data type "input" and data quantity "small" which correspond to the parameter name "Hostname" of the node name "start up server".

Step S65: The workflow creation engine 511 of Fig. 8 arranges acquired screen components on the form screen.

The workflow creation engine 511 reads out, in sequence from the data range management table Tdm2 of Fig. 26, the form ID of the workflow being created, node names and parameter names corresponding to the node order of the form ID, and data IDs. Then, the workflow creation engine 511 stores the respectively data in the form ID column, parameter name column and data ID column in the form management table Tfm2 of Fig. 27. Further, when there exists a parameter which corresponds to the screen component which the form creation engine 514 of Fig. 8 has acquired from the screen component definition table Tdp of Fig. 15, in the parameters stored in the parameter name column in the data range management table Tdm2, the workflow creation engine 511 of Fig. 8 stores the screen component in the screen component column corresponding to the parameter.

In the above-described example, the workflow creation engine 511 reads out, from the data range management table Tdm2 of Fig. 26, the form ID "001-A" of the workflow being created, the node name "acquire configuration item" corresponding to the node order "i-1" of the form ID, the parameter name "Result_fist", and the data ID "001A-01". Then, the workflow creation engine 511 stores, in the form management table Tfm2 of Fig. 27, the form ID in the form ID column, and stores in sequence node names and parameter names in the parameter name column, and data IDs in the data ID column. And, the form creation engine 514 has already acquired "combo box" as the screen component name of the parameter name "Result_list", and so the workflow creation engine 511 stores "combo box" in the screen component name column corresponding to the parameter name "Result_list".

Further, the workflow creation engine 511 reads out, from the data range management table Tdm2 of Fig. 26, the form ID "001-A" of the workflow being created, the node name "start up server" corresponding to the node order "i+1" of the form ID, the parameter name "Hostname", and the data ID "001A-02". The workflow creation engine 511 then stores in sequence, in the form management table Tfm2 of Fig. 27, the node name and parameter name in the node name column and the parameter name column, and the data ID in the data ID column. Further, the form creation engine 514 has acquired "text" as the screen component name for the parameter name "Hostname", and so the workflow creation engine 511 stores "text" in the screen component name column corresponding to the parameter name "Hostname".

When, among the parameters stored in the parameter name column, there are no parameters for which the form creation engine 514 of Fig. 8 has acquired a screen component from Fig. 15, the workflow creation engine 511 of Fig. 8 stores for example "label" in the screen component column. In the above-described example, for the parameter names "acquire configuration item" and "start up server", the form creation engine 514 of Fig. 8 does not acquire screen components from Fig. 15. Hence the workflow creation engine 511 of Fig. 8 stores "label" in the screen component name column corresponding to these.

Further, the workflow creation engine 511 reads out, from the data range template Tdt of Fig. 17, form position information corresponding to the node order of the form ID of the workflow being created in the data range management table Tdm2 of Fig. 26. The workflow creation engine 511 then stores the read-out form position information in the position column corresponding to the parameter name column in which parameter names are stored corresponding to the node order in Fig. 27.

In the above-described example, the workflow creation engine 511 reads out from the data range template Tdt of Fig. 17 the form position information "L1-1" corresponding to the node order "i-1" of the form ID "001-A" of the workflow being created in the data range management table Tdm2 of Fig. 26. And, the workflow creation engine 511 stores the read-out form position information "L1-1" in the position column of the form management table Tfm2 of Fig. 27 corresponding to the parameter name "Result_list", which corresponds to the node order "i-1".

Here, the workflow creation engine 511 stores the character string "L1" preceding the dash "-" in the position information "L1-1" in the row of the position column above where the position information "L1-1" is stored.

Further, in the above-described example, the workflow creation engine 511 reads out from the data range template Tdt of Fig. 17 the form position information "R1-1" corresponding to the node order "i+1" of the form ID "001-A" of the workflow being created in the data range management table Tdm2 of Fig. 26. And, in the form management table Tfm2 of Fig. 27, the workflow creation engine 511 stores the read-out form position information "R1-1" in the position column corresponding to the parameter name "Hostname", which corresponds to the node order "i+1".

Here, the workflow creation engine 511 stores the character string "R1" preceding the dash "-" in the position information "R1-1" in the row of the position column above where the position information "R1-1" is stored.

Further, in the form management table Tfm2 of Fig. 27, when a plurality of parameter names are stored corresponding to each node order, the workflow creation engine 511 reads out position information for each parameter name from the data range template Tdt of Fig. 17.

Further, the workflow creation engine 511 stores the form ID "001-A" identifying the form of the workflow being created in the form ID column of the activity management table Ta2 of Fig. 25.

Step S65: The form creation engine 514 of Fig. 8 displays the form creation screen on the display device 72, and based on the form management table Tfm2 of Fig. 27, displays the screen components of the form. The display processing was explained in step S15 of Fig. 20, and so is omitted.

Fig. 7 illustrates the form creation screen which is displayed in automated form generation executed when first creating a new workflow, explained in Fig. 30. In the form creation screen D31 of Fig. 7, in contrast with the form creation screen D11 of Fig. 5, the "XPATH" indicated by the symbol P12 and the text box indicated by the symbol P13 in Fig. 5 are not arranged on the screen.

Through the processing explained above, processing for automated creation of a workflow form during initial creation in Fig. 30 ends, and processing proceeds to step S6 in Fig. 19. Through the processing for automated form creation explained in Fig. 30, based on previously defined tables and templates, the optimal form for the workflow being created for the first time can be created automatically. As a result, the job burden on the creator is alleviated.

Further, when there is a previously created workflow as explained in Fig. 20, in the flowchart of Fig. 30 processing similar to form creation processing is used in automated form creation, so that there is no need to newly develop the processing flow explained in the flowchart of Fig. 30. As a result, the number of processes during development can be reduced.

Regarding the processing of step S43 in Fig. 22, executed when there is no similar previously created workflow (step S38/no coincidence in Fig. 22, loop LP32 completed), by executing steps S62 to S64 in Fig. 30, the content of the form ID (002-A) in the data range management table Tdm1 of Fig. 11 and the form management table Tfm1 of Fig. 12 is updated.

Specifically, the data range decision engine 513 of Fig. 8 executes the processing of step S62 in Fig. 30, stores the form ID "002-A" in the form ID column of the data range management table Tdm1 of Fig. 11 corresponding to the workflow being created, stores the node order in the node order column, stores the node names in the node name column, stores the parameter names in the parameter name column, stores the data types in the data type column, and stores the data IDs in the data ID column. At this time, the content of the workflow being created (flow ID "002") in the workflow management table Tw1 of Fig. 9 is referenced.

As a result, as the content of the form ID "002-A" in the data range management table Tdm1 of Fig. 11, the content of form ID "001-A" (initial content) in the data range management table Tdm2 of Fig. 26 is stored.

Next, the form creation engine 514 of Fig. 8 executes the processing of steps S63 and S64, stores the form ID "002-A" in the form ID column of the form management table Tfm1 of Fig. 12 corresponding to the workflow being created, stores parameter names in the parameter name column, stores screen components in the screen component name column, stores data IDs in the data ID column, and stores position information in the position column. At this time, the data range of the above-described initial content is referenced.

Below, form screen creation processing is summarized for a case when it is determined that form screen creation is performed for the first time, or for a case when it is determined that there is no similar previously created workflow, that is, a case when it is determined that the categories are different (step S38/no coincidence in Fig. 22, loop LP32 completed).

Based on the operation manipulation component management table To of Fig. 14 and the screen component definition table Tdp of Fig. 15, the data range decision engine 513 and form creation engine 514 decide the name of the screen component which matches the parameter type and data quantity corresponding to the name of the parameter of the first node (operation manipulation component node) of the new workflow. Specifically, based on the operation manipulation component management table To of Fig. 14, the data range decision engine 513 decides the name of the parameter of the first node (see step S62 of Fig. 30). Then, based on the operation manipulation component management table To of Fig. 14 and the screen component definition table Tdp of Fig. 15, the form creation engine 514 decides the screen component corresponding to the name of the parameter (see steps S63 and S64 in Fig. 30).

Based on the data range template Tdt of Fig. 17 and the order information of the first node taking as reference a second node in the new workflow, the form creation engine 514 decides an arrangement position at which the screen component with the name which has been decided is to be arranged on the form screen of the new workflow.

For example, for the screen component with the name decided as described above for the first node connected before (node order information (order "i-1")), taking as reference the second node, the form creation engine 514 decides on arrangement at the position of the position information corresponding to the acquisition system component (on the left side of the form screen) in the data range template Tdt of Fig. 17. Similarly, for example for the screen component with the name decided as described above for the first node connected after (node order information (order "i+1")), taking as reference the second node, the form creation engine 514 decides on arrangement at the position of the position information corresponding to the manipulation system component (on the right side of the form screen) in the data range template Tdt of Fig. 17. A specific example of this decision processing was explained in step S65 of Fig. 30, and so an explanation is omitted.

Finally, the form creation engine 514 arranges the screen component with the name which has been decided at the decided arrangement position. In the above-described example, the form creation engine 514 arranges the screen components of the form (form ID "001-A") of the new workflow in the form management table Tfm2 of Fig. 27 at form screen positions corresponding to the position information for the screen components (see step S65 in Fig. 30).

### Form Screen Customizing

The form customizing explained in step S6 of Fig. 19 is explained, based on Fig. 5, Fig. 7, Fig. 14, Fig. 15, Fig. 28 and Fig. 29.

Through the processing explained in Fig. 30, a form screen corresponding to the workflow pattern was created. At this time, the creator newly adds a text (box) to the created screen D31 of Fig. 7, for input of a search formula (XPath) indicating the configuration item which is the target for acquisition when acquiring a configuration item. This text box corresponds to the symbol P13 in Fig. 5.

The creator manipulates the manipulation device 81 of Fig. 8, and in Fig. 7 moves the "Result_list" label indicated by the symbol P14 and the list box indicated by the symbol P15 downward. As illustrated in Fig. 5, the creator then adds the "XPATH" label indicated by the symbol P12 and the text box indicated by the symbol P13 between "acquire configuration item" indicated by the symbol P11 and the above-described "Result_list" indicated by the symbol P14, which have been moved downward and "combo box" indicated by the symbol P15, which have been moved downward.

The workflow creation engine 511 of Fig. 8 detects this movement and addition, and executes processing to update the content of the data range management table Tdm2 of Fig. 26 and the form management table Tfm2 of Fig. 27. Specifically, through the above-described addition, in the node name "acquire configuration item", the workflow creation engine 511 notifies the data range decision engine 513 that a text box for XPATH input has been newly added as a parameter.

In response to this notification, the data range decision engine 513 updates the content of the data range management table Tdm2 of Fig. 26 so as to illustrate the data range management table Tdm3 of Fig. 28. In the above-described example, the data range decision engine 513 adds the parameter name "XPath" to the parameter name column corresponding to the node name "acquire configuration item" of the form ID "001-A" which identifies the form of the workflow being created. And, from among the operation manipulation component management table To of Fig. 14, the data range decision engine 513 searches for the data type "input" corresponding to the parameter name "XPath" corresponding to the node name "acquire configuration item", and stores the "input" of the search in the data type column corresponding to the parameter name "XPath" in the data range management table Tdm2 of Fig. 26. Finally, the data range decision engine 513 reassigns, in order from above, data IDs in the data ID column corresponding to the node name "acquire configuration item". The data range decision engine 513 takes the data IDs in the data ID column of Fig. 26 to be "001A-001" to "001A-003".

Next, through the above-described modification and addition, the workflow creation engine 511 updates the content of the form management table Tfm2 of Fig. 27, as illustrated in the form management table Tfm3 of Fig. 29. This updating is performed referring to the data range management table Tdm3 of Fig. 28. In the above-described example, the workflow creation engine 511 adds the "XPATH" label indicated by the symbol P12 and the text box indicated by the symbol P13 between "acquire configuration item" indicated by the symbol P11, and "Result_list" indicated by the symbol P14 and "combo box" indicated by the symbol P15. Then, as illustrated in the form management table Tfm3 of Fig. 29, the workflow creation engine 511 stores a new "XPath" between "acquire configuration item" and "Result_list" in the parameter name column.

The workflow creation engine 511 searches in the parameter name column of the operation manipulation component management table To of Fig. 14 for the data type "input" and data quantity "small" corresponding to the newly added parameter "XPath". Further, the workflow creation engine 511 searches in the screen component definition table Tdp of Fig. 15 for the screen component name "text" corresponding to the data type "input" and data quantity "small". At this time, searching is performed from the beginning (the upper side in the figure) of the screen component definition table Tdp. The workflow creation engine 511 then stores the screen component name "text" resulting from the search in the screen component column in the form management table Tfm2 of Fig. 27, the screen component column which corresponds to the parameter "XPath". And, as explained in Fig. 26, the workflow creation engine 511 stores the newly allocated data IDs "001A-001" to "001A-003" in the data ID column.

Finally, the positions of screen components are updated by the above-described customizing, and so the workflow creation engine 511 specifies the position information of updated parameters based on the form template Tft of Fig. 16.

In the above-described example the workflow creation engine 511 detects that the "Result_list" indicated by the symbol P14 and "combo box" indicated by the symbol P15 in Fig. 5 have been moved to the position indicated by the symbol L1-2 in the form template Tft of Fig. 16. The workflow creation engine 511 stores the position information "L1-2" in the position column in the form management table Tfm3 of Fig. 29, the position column which corresponds to the parameter name "Result_list" and screen component name "combo box".

Further, in the above-described example the workflow creation engine 511 detects that the "XPATH" label indicated by the symbol P12 and "text box" indicated by the symbol P13 have been added to position indicated by the symbol L1-1 in Fig. 16. The workflow creation engine 511 stores the position information "L1-1" in the position column in the form management table Tfm3 of Fig. 29, the position column corresponds to the parameter name "XPath" and screen component name "text".

Each time a new workflow is newly created, the workflow management table Tw, activity management table Ta, data range management table Tdm and form management table Tfm are updated, as explained in Fig. 9 to Fig. 12 and Fig. 20.

Through the table updating processing explained above, even when the creator himself modifies a workflow form, the workflow creation engine 511 detects the modification and updates the content of the data range management table Tdm2 and form management table Tfm2 corresponding to the modification (see Fig. 28 and Fig. 29).

Each of the updated tables reflects the content of the workflow form customized by the workflow creator so as to enable easier use by a workflow user (system manager).

Hence based on tables reflecting the content of these forms, the form of a workflow being created can be created as explained in Fig. 20. Consequently a system manager can use the workflow form, which is made easy to use, to perform operation management of the system, so that the burden of tasks for system operation management is alleviated.

## Claims

1. An information processing method, which automates operation tasks in an information processing system using a workflow which represents an operation procedure of the information processing system by connection of a plurality of nodes,
the information processing method comprising:
creating a new workflow including at least a first node which executes control processing of the information processing system and a second node to which is added a form including a screen component which performs at least of input and output to information relating to the control processing, by a processor (511);
detecting a pattern of the new workflow to be created, based on first information which stores a workflow pattern by the processor (512);
deciding a screen component to be arranged on a form screen of the new workflow, based on the pattern of the new workflow and the content of control processing of the first node in the new workflow, by the processor (513, 514); and
arranging the screen component of the new workflow on the form screen by the processor (514).

2. The information processing method according to Claim 1, wherein
the deciding comprises deciding an arrangement position of the screen component on the form screen, based on the pattern of the new workflow and the content of control processing of the first node in the new workflow (513, 514); and
the arranging comprises arranging the screen component of the new workflow at the arrangement position (514).

3. The information processing method according to Claim 2, wherein, the new workflow includes first nodes connected before and after the second node respectively.

4. The information processing method according to Claim 2, further comprising:
determining the new workflow and a previously created workflow which has been already created are the same, based on second information stores , in association with one another, order information of the first node taking the second node as reference and a name of the first node in a previously created workflow by the processor (513);
wherein the arranging comprises arranging, when the new workflow and the previously created workflow are the same, a same screen component as a screen component arranged on the form screen of the previously created workflow which has been determined to be the same, on the form screen of the new workflow, at the same position as a position of screen component arranged on the form screen of the previously created workflow which has been determined to be the same, based on third information which stores a name and an arrangement position of a screen component arranged on a form screen of the previously created workflow (514).

5. The information processing method according to Claim 4, wherein
the determining comprises determining, when the previously created workflow and the new workflow are not the same, based on fourth information which stores a category corresponding to the name of the first node, whether the category of the first node of the previously created workflow and the category of the first node of the new workflow are the same (513);
the deciding comprises deciding, when the category of the first node of the previously created workflow and the category of the first node of the new workflow are the same, based on fifth information which stores, in association with one another, the name of a parameter corresponding to the content of control processing in the first node, the type of the parameter, and the data quantity input and output via the parameter, and sixth information which stores, in association with one another, the type of the parameter, the data quantity, and the name of the screen component, a name of a screen component which matches the type of the parameter and the data quantity corresponding to the name of the parameter of the first node of the new workflow (513, 514), and
deciding, an arrangement position at which the screen component with the name which has been decided is to be arranged on the form screen of the new workflow, based on the third information and the arrangement position of the screen component arranged on the form screen of the previously created workflow which includes the first node determined to have the same category (514); and
the arranging comprises arranging, the screen component with the name which has been decided at the arrangement position which has been decided (514).

6. The information processing method according to Claim 5, wherein
the deciding comprises deciding, when the category of the first node of the previously created workflow and the category of the first node of the new workflow are not the same, a name of a screen component which matches both the type of the parameter and the data quantity corresponding to the parameter name of the first node of the new workflow, based on the fifth information and the sixth information (513, 514), and
deciding an arrangement position at which the screen component with the name which has been decided is to be arranged on the form screen of the new workflow, based on seventh information which stores order information for the first node taking the second node as reference and the screen component arrangement position, and order information for the first node taking the second node as reference in the new workflow (514).

7. The information processing method according to Claim 2, further comprising:
determining whether or not a new workflow is to be created for the first time (511);
wherein the deciding comprises deciding, when a new workflow is created for the first time, based on fifth information which stores, in association with one another, the name of a parameter corresponding to the content of control processing in the first node, the type of the parameter, and the data quantity input and output via the parameter, and sixth information which stores, in association with one another, the type of the parameter, the data quantity, and the name of the screen component, a name of a screen component which matches the type of the parameter and the data quantity corresponding to the name of the parameter of the first node of the new workflow(513,514), and
deciding an arrangement position at which the screen component with the name which has been decided is to be arranged on the form screen of the new workflow, based on seventh information which stores order information for the first node taking the second node as reference and the screen component arrangement position, and order information for the first node taking the second node as reference in the new workflow (514); and
the arranging comprises arranging, the screen component with the name which has been decided at the arrangement position which has been decided (514).

8. The information processing method according to Claim 5, wherein
the determining comprises determining whether the name of the first node of the new workflow exists in eighth information which stores, in association with one another, the name of the first node, the name of a parameter corresponding to the content of control processing in the first node, the type of the parameter, and the quantity of historical data actually input and output via the parameter of the first node when the first node is executed (514); and
the deciding comprises deciding, when the name of the first node of the new workflow exists in the eighth information, a name of a screen component which matches the type of the parameter and the data quantity corresponding to the name of the parameter of the first node of the new workflow, based on the sixth information and the eighth information (513, 514).

9. A computer program comprising program code means for executing the information processing method of claim 1.

10. A computer program comprising program code means for executing the information processing method of claim 2.

11. A computer-readable storage medium having stored thereon the computer program of claim 9.

12. A computer-readable storage medium having stored thereon the computer program of claim 10.

13. An information processing system comprising:
a terminal device which automates operation tasks in the information processing system using a workflow which represents an operation procedure of the information processing system by connection of a plurality of nodes, wherein the terminal device (5) comprises:
a storage unit (506) which stores first information which stores a pattern of a workflow;
a control unit (501) which creates a new workflow including at least a first node which executes control processing of the information processing system and a second node to which is added a form including a screen component which performs at least of input and output to information relating to the control processing (511), detects a pattern of the new workflow to be created, based on the first information (512), decides a screen component to be arranged on a form screen of the new workflow, based on the pattern of the new workflow and the content of control processing of the first node in the new workflow, and arranges the screen component of the new workflow on the form screen (514).

14. The information processing system according to Claim 13, wherein the control unit decides, an arrangement position of the screen component on the form screen, based on the pattern of the new workflow and the content of control processing of the first node in the new workflow (513, 514), and arranges the screen component of the new workflow at the arrangement position (514).
